# EUROPÄISCHE PATENTSCHRIFT

(11) **EP 3 821 706 B1**
(45) Veröffentlichungstag und Bekanntmachung des Hinweises auf die Patenterteilung: **03.04.2024**
(21) Anmeldenummer: 20201269.6
(22) Anmeldetag: 12.10.2020
(51) Int. Cl.: A01K 31/14

(54) **KÜNSTLICHES QUARTIER FÜR WENIGSTENS EIN FLEDERTIER, INSBESONDERE FÜR WENIGSTENS EINE FLEDERMAUS UND VERFAHREN ZU SEINER HERSTELLUNG**
ARTIFICIAL ROOST FOR AT LEAST ONE CHIROPTER, IN PARTICULAR FOR AT LEAST ONE BAT AND METHOD FOR ITS CONSTRUCTION
HÉBERGEMENT ARTIFICIEL POUR AU MOINS UN CHIROPTÈRE, EN PARTICULIER POUR AU MOINS UNE CHAUVE-SOURIS ET PROCÉDÉ POUR SA FABRICATION

(30) Priorität: 18.11.2019 DE 102019131102
(43) Veröffentlichungstag der Anmeldung: 19.05.2021
(73) Patentinhaber: Trautner, Jürgen, 72631 Aichtal (DE)
(72) Erfinder: Trautner, Jürgen, 72631 Aichtal (DE); Rall, Sebastian, 92224 Amberg (DE); Bräunicke, Michael, 70180 Stuttgart (DE)
(74) Vertreter: Hafner & Kohl PartmbB

(56) Entgegenhaltungen:
- DE-B- 1 006 659
- DE-B3-102014 009 981
- DE-C1- 4 311 042
- ES-U- 1 128 105

## Beschreibung

Die Erfindung betrifft ein künstliches Quartier für wenigstens ein Fledertier, insbesondere für wenigstens eine Fledermaus, umfassend ein zumindest abschnittsweise einen Innenraum umgebendes Gehäuse. Solche künstliche Quartiere sind beispielsweise aus den Dokumenten DE1006659B, DE4311042C1, ES1128105U und DE102014009981B3 bekannt.

Fledertiere (wissenschaftlicher Name: Chiroptera) sind eine rund 1100 Arten umfassende Säugetiergruppe. Viele Arten leben in großen Kolonien, oft aus Tausenden von Tieren, andere Arten sind Einzelgänger. Die Fledertierarten stellen aufgrund der durch die Zivilisation zurückgedrängten Lebensräume eine bedrohte Artengruppe dar. Der Lebensraum wird durch Rodungen oder durch den Einsatz von Pestiziden und Pflanzenschutzmitteln und durch eine Versiegelung oder die Zerstörung von Schlafplätzen im Zuge von Altbausanierungen stetig verkleinert. Der Erfindung liegt die Aufgabe zugrunde, ein künstliches Quartier für wenigstens ein Fledertier, insbesondere für wenigstens eine Fledermaus, bereitzustellen, welches insbesondere im Hinblick auf eine einfache und schnelle sowie kostengünstige Maßnahme eine Annahme des künstlichen Quartiers durch das Fledertier als dessen Lebensraum bzw. als dessen Schlafplatz ermöglicht. Ferner soll sich das künstliche Quartier in eine mit Gebäuden bebaute Umgebung einpassen bzw. einfügen, ohne dabei die Attraktivität als Lebensraum für die Fledertiere und ohne den Nutzwert der Gebäude zu schmälern.

Die Aufgabe wird durch ein künstliches Quartier für wenigstens ein Fledertier, insbesondere für wenigstens eine Fledermaus, gemäß Anspruch 1 gelöst. Die hierzu abhängigen Ansprüche betreffen mögliche Ausführungsformen des künstlichen Quartiers.

Die Erfindung betrifft ein künstliches Quartier für wenigstens ein Fledertier, insbesondere für wenigstens eine Fledermaus, umfassend ein zumindest abschnittsweise einen Innenraum definierendes bzw. umgebendes Gehäuse, wobei das Gehäuse über eine Verbindungseinrichtung an einem Gegenstand, insbesondere einem Gebäude, befestigbar ist. Durch das zumindest abschnittsweise, insbesondere vollständig, den Innenraum umgebende bzw. den Innenraum definierende Gehäuse kann ein geschützter Lebensraum eines Fledertiers, insbesondere mindestens einer Fledermaus, geschaffen werden. Das den Innenraum definierende Gehäuse sieht wenigstens eine erste Öffnung vor, welche als Einflug- und/oder Ausflugöffnung dienen kann. Durch Durchschreiten bzw. Hindurchbewegen des Fledertiers durch die Einflug- und/oder Ausflugöffnung kann das Fledertier von außerhalb des künstlichen Quartiers in den Innenraum hineingelangen und/oder aus den Innenraum nach außerhalb des künstlichen Quartiers hinausgelangen.

Die Verbindungseinrichtung ermöglicht eine kraft- und/oder stoff- und/oder kraftschlüssige Verbindung des Gehäuses an einem Gegenstand. Als Gegenstand kann dabei ein Erdboden, ein Felsen, ein Baum oder ein Gebäude dienen. Insbesondere die Verbindung des Gehäuses an einem Gebäude, insbesondere an einer Gebäudeaußenwand bzw. einer Gebäudefassade, ermöglicht eine Einbindung des künstlichen Quartiers und damit des künstlichen Lebensraums des Fledertiers in eine bebaute Umgebung, insbesondere in Industrie- und/oder Gewerbe- und/oder Wohngebieten von beispielsweise Städten. So kann eine Verbindungseinrichtung auch ein Abstellen und/oder ein Verankern eines Gehäuses auf einer Aufstellfläche umfassen.

Der von dem Gehäuse umgebene Innenraum des künstlichen Quartiers kann beispielsweise durch zumindest abschnittsweise Wände des Gehäuses und durch zumindest abschnittsweise durch wenigstens eine Oberfläche des Gegenstands, insbesondere durch wenigstens eine Oberfläche eines Gebäudes bzw. einer Gebäude(außen)wand, umgeben bzw. abgegrenzt, d. h. definiert, werden. Damit kann der Innenraum in seiner wesentlichen Form bzw. Geometrie durch das Gehäuse allein oder durch einen von Gehäuse und Gegenstand gemeinsam definierten bzw. umgebenen Raum gebildet werden. Beispielsweise bildet ein u-förmiges Gehäuse mit einer die freien u-Schenkel verschließenden Fläche eines Gegenstands, insbesondere eines Gebäudes, eine einen Innenraum abgrenzende bzw. definierende Kontur.

Alternativ oder zusätzlich kann eine zumindest abschnittsweise geschlossene Ringkontur gebildet werden durch das Gehäuse allein oder durch Teile eines Gehäuses und zumindest einer Wand eines Gebäudes. Diese können beispielsweise eine Mantelfläche bilden, welche den Innenraum durch diesen umgebende bzw. definierende Wänden des Gehäuses und/oder des Gegenstands begrenzt.

Gemäß der Erfindung umfasst das künstliche Quartier ein erstes, einen ersten Innenraum zumindest abschnittsweise definierendes, insbesondere umgebendes, Gehäuse und ein weiteres, einen weiteren Innenraum zumindest abschnittsweise definierendes, insbesondere umgebendes, Gehäuse, wobei das erste und das weitere Gehäuse jeweils eine Verbindungsöffnung umfassen und zumindest in einem Endmontagezustand des künstlichen Quartiers der erste Innenraum und der weitere Innenraum über die Verbindungsöffnungen, insbesondere unmittelbar, miteinander verbindbar oder verbunden sind. Damit ist der erste und der weitere Innenraum derart miteinander verbunden, dass sich ein im ersten Innenraum eines ersten Gehäuses befindendes Fledertier über die Verbindungsöffnungen in den Innenraum des weiteren Gehäuses bewegen kann, ohne hierfür das künstliche Quartier verlassen zu müssen. Auch können eine Vielzahl an Gehäuse zusammengesetzt sein, wobei an einer Verbindungsschnittstelle zweier benachbarter Gehäuse jeweils über die entsprechenden Verbindungsöffnungen Übertrittsmöglichkeiten für die Fledertiere geschaffen werden können.

Eine mittelbare Verbindung der Verbindungsöffnung zweier einander angrenzender Gehäuse kann beispielsweise durch das Vorsehen eines Verbindungskanals erfolgen, wobei sich der Verbindungskanal von einer dem Innenbereich des ersten Gehäuses abgewandten Oberfläche zu einer dem Innenbereich des weiteren Gehäuses abgewandten Oberfläche des weiteren Gehäuses erstrecken kann. Hierbei kann sich der Verbindungskanal als, insbesondere gas- und/oder lichtdichte, Verbindung der beiden einander zugeordneten Verbindungsöffnungen zwischen diesen erstrecken.

Dadurch, dass die Gehäuse untereinander derart zusammenfügbar bzw. zusammensetzbar sind, dass die jeweiligen gehäuseseitigen Innenräume miteinander über gehäuseseitige Verbindungsöffnungen verbindbar sind, wird ein einheitliches, insbesondere durch ein als Gleichteilbaugruppe konzipiertes, Gehäuse bzw. Gehäusesystem gebildet, welches je nach Örtlichkeit und/oder je nach Bedarf beliebig zusammenzusetzen ist, um durch die dann verbundenen Innenräume einen entsprechend großen und zusammenhängenden Lebensraum, gleichwohl räumlich gegliederten zu schaffen. Mit anderen Worten kann ein Fledertier sich von einem ersten Innenraum zu einem weiteren Innenraum bewegen, ohne die zusammengesetzte Gruppe an Gehäusekörpern bzw. ohne das künstliche Quartier zu verlassen. Damit wird ein geschützter Bewegungs- bzw. Ruheraum für wenigstens ein Fledertier, insbesondere eine Fledermaus, geschaffen, der auf einfache und kostengünstige Weise erweiterbar oder reduzierbar ist.

Insbesondere für Fledertierarten, welche es bevorzugen in Kolonien zu leben, kann durch die in beliebiger Anzahl miteinander über die Verbindungsöffnungen verbindbaren Gehäuse ein an das Gruppen- bzw. Rudelverhalten der Fledertiere angepasstes künstliches Quartier, insbesondere ein unter wirtschaftlich vertretbarem Aufwand herstellbares und an örtliche Verhältnisse anpassbares künstliches Quartier, bereitgestellt werden.

Beispielsweise werden die Gehäuse in einer Reihe derart aneinandergesetzt, dass ein erstes Gehäuse eine einzige Verbindungsöffnung zu einem benachbarten Gehäuse aufweist. Dieses dem ersten Gehäuse benachbarte Gehäuse kann zwei Verbindungsöffnungen umfassen, wobei die erste Verbindungsöffnung dem ersten Gehäuse und eine zweite Verbindungsöffnung einem dritten, dem zweiten Gehäuse wiederum benachbarten Gehäuse zugeordnet ist. Das in dieser Richtung weitergehend letzte Gehäuse kann wiederum nur eine einzige Verbindungsöffnung zum vorhergehenden Gehäuse umfassen.

Die Aneinanderreihung der Gehäuse zur Bildung eines zusammenhängenden künstlichen Quartiers kann zumindest abschnittsweise in einer geraden Linie erfolgen und/oder zumindest abschnittsweise eine gebogene oder eine geeckte Linie beschreiben. Beispielsweise können zwei an über ein Eck eines Gebäudes an dem Gebäude montierte Gehäuse miteinander entsprechend über das Eck zusammenwirkende bzw. verbundene Verbindungsöffnungen zusammengesetzt sein. Damit kann sich ein künstliches Quartier über unterschiedliche Hauswandabschnitte erstrecken, wobei die Hauswandabschnitte an demselben Haus oder über mehrere unterschiedliche Häuser hinweg angeordnet oder ausgebildet sein können. Damit kann beispielsweise ein künstliches Quartier ermöglicht werden, das an unterschiedliche Expositionen einer größten Flächen einer Gehäuseaußenwand anpassbar oder anordenbar ist. Auch kann ein künstliches Quartier ermöglicht werden, das mehrere Gebäude bzw. Gebäudeteile übergreift.

Alternativ oder zusätzlich kann durch ein Verschlussmittel eine Verbindungsöffnung eines Gehäuses zumindest temporär oder dauerhaft verschließbar sein. Damit kann es ermöglicht werden, durch eine einzige Art an Gehäuse, die jeweils eine identische Anzahl an Verbindungsöffnungen aufweist, je nach Anbauort, bzw. je nachdem, ob das Gehäuse an einem Anfang oder Ende einer in Reihe montierter Gehäuse angeordnet oder ausgebildet ist, bedarfsweise mit dem Verschlussmittel den Zutritt durch die werksseitig freiliegende Verbindungsöffnung in den Innenraum gegenüber der Umwelt bedarfsweise zu verschließen.

Die Verbindungsöffnungen der jeweils zueinander angeordneten Gehäuse, insbesondere sämtlicher Gehäuse des künstlichen Quartiers, können eine zumindest im Endmontagezustand zueinander korrespondierende Form und/oder Dimensionierung aufweisen. Vorzugsweise sind die Verbindungsöffnungen sämtlicher Gehäuse eines künstlichen Quartiers gleichartig oder identisch ausgebildet.

In einer vorteilhaften Ausführungsform kann es vorgesehen sein, dass (a) ein erster Innenraum durch (a1) eine Vorderwand, (a2) eine erste Seitenwand, (a3) eine zweite Seitenwand und (a4) ein Dachelement des ersten Gehäuses und (a5) eine Rückwand des ersten Gehäuses oder eine Fläche des über die Verbindungseinrichtung mit dem Gehäuse befestigten Gegenstands, insbesondere des Gebäudes, gebildet wird und/oder (b) ein weiterer Innenraum durch (b1) eine Vorderwand, (b2) eine erste Seitenwand, (b3) eine zweite Seitenwand und (b4) ein Dachelement des weiteren Gehäuses und (b5) eine Rückwand des weiteren Gehäuses oder eine Fläche des über die Verbindungseinrichtung mit dem weiteren Gehäuse befestigten Gegenstands, insbesondere des Gebäudes, gebildet wird, wobei der erste Innenraum und/oder der weitere Innenraum durch eine an dem ersten und/oder an dem weiteren Gehäuse angeordnete oder ausgebildete Einflug- und/oder Ausflugöffnung für das wenigstens eine Fledertier zugänglich ist.

Erfindungsgemäß weisen das erste und das weitere Gehäuse, zumindest im Endmontagezustand an einem geodätisch tief liegenden Ort des ersten und/oder weiteren Gehäuses eine Einflug- und/oder Ausflugöffnung auf.

Dabei bildet die Einflug- und/oder Ausflugöffnung eine, insbesondere einzige, Möglichkeit für das Fledertier von außerhalb des künstlichen Quartiers in den Innenraum eines definierten Gehäuses zu gelangen. Vorzugsweise ist die Einflug- und/oder Ausflugöffnung als linienartige bzw. balkenartige Öffnung ausgebildet. Mit anderen Worten kann die Einflug- und/oder Ausflugöffnung eine längliche quaderartige bzw. quaderförmige Form aufweisen. Bevorzugt kann die Einflug- und/oder Ausflugöffnung sich zumindest überwiegend, insbesondere zumindest nahezu vollständig, über die Längserstreckung des Gehäuses erstrecken. Dadurch, dass die Einflug- und/oder Ausflugöffnung an einem geodätisch tief liegenden Ort des Gehäuses angeordnet ist wird es ermöglicht, dass ein im Innenraum des Gehäuses befindliches Fledertier allein durch ein sich Fallenlassen das Gehäuse verlassen kann. Diese Möglichkeit kann die Akzeptanz des künstlichen Quartiers zumindest für bestimmte Fledertierarten signifikant steigern, da diese schnelle Fluchtmöglichkeit oder eine einfache bzw. komfortable Abflugmöglichkeit ein Kriterium zur Auswahl eines Schlaf- und/oder Ruheortes bilden kann.

Die Wände des Gehäuses können zumindest abschnittsweise durch Einzelteile ausgebildet sein, welche im zusammengebauten Zustand zumindest abschnittsweise, insbesondere (nahezu) vollständig, das Gehäuse bilden. Alternativ oder zusätzlich können wenigstens zwei Wände des Gehäuses zumindest abschnittsweise durch eine integrale Form eines Wandabschnitts ausgebildet sein, d. h. z. B., dass eine erste Seitenwand und eine Vorderwand aus einem einstückigen, insbesondere L-förmigen, Bauteilabschnitt ausgebildet sein kann oder sein könnte. Im Falle eines zumindest abschnittsweise, insbesondere vollständig, aus zusammengebauten Einzelteilen gebildeten Gehäuses können die Einzelteile stoff- und/oder form- und/oder kraftschlüssig miteinander verbunden sein.

Es ist möglich, dass das erste und/oder weitere Gehäuse eine flächenhafte und/oder panelartige, insbesondere quaderartige, Form aufweist oder aufweisen, deren Länge und/oder Höhe wenigstens dem Zweifachen, bevorzugt wenigstens dem Vierfachen, besonders bevorzugt wenigstens dem Siebenfachen, höchst bevorzugt wenigstens dem Neunfachen, der Tiefe des Gehäuses entsprechen oder entspricht. Damit kann beispielsweise eine plattenartige bzw. panelartige Form des künstlichen Quartiers erzielt werden, welche sich auf einfache und komfortable Weise in eine Wohn-, Gewerbe- oder Industriebebauung integrieren lässt. Beispielsweise werden das platten- und/oder panelartige künstliche Quartier als Wandaufsatz an Gebäudefassaden bzw. Gebäudewände angebaut, insbesondere eingehängt. Vorzugsweise können die Gehäuse des künstlichen Quartiers im Traufbereich eines Gebäudes abwärts angeordnet werden. Auch kann wenigstens ein Gehäuse alternativ oder zusätzlich unterhalb von einer Fensterkante angeordnet sein. Damit kann sich der unterhalb eines Fensters befindliche Flächenbereich eines Gebäudes als Anbringungsort für ein hierin beschriebenes künstliches Quartier eignen.

Die flächenhaften bzw. panelartigen Gehäuse des künstlichen Quartiers können an deren Schmalseiten und/oder an deren Haupterstreckungsseiten aneinander angesetzt werde. Im Falle von an den Schmalseiten aneinandergesetzten Gehäusen kann ein langes uns schmales künstliches Quartier ausgebildet werden. Im Falle von an der Haupterstreckungsseite, d. h. an der Oberfläche, welche die Länge und Breite ausbildet, aneinandergesetzten Gehäusen kann ein künstliches Quartier mit einer Tiefe gebildet werden, die größer ist als die Tiefe der einzelnen Gehäuse. Die Übertritte bzw. die Verbindungsöffnungen für die Feldertiere sind je nach Art des Aneinandersetzens entweder an der Schmalseite, d. h. z. B. an den Seitenwänden, oder an der Haupterstreckungsseite, d. h. z. B. an der Vorder- und/oder Rückwand angeordnet bzw. ausgebildet.

In einer beispielshaften Ausführungsform kann ein Gehäuse eine Länge und/oder Breite von 400 mm bis 2200 mm, bevorzugt von 600 bis 1900 mm, besonders bevorzugt von 800 bis 1500, höchst bevorzugt von 1050 bis 1250 mm, und eine Tiefe von 40 bis 350 mm, bevorzugt von 50 bis 250, besonders bevorzugt von 65 bis 175 mm, höchst bevorzugt von 75 bis 125 mm, umfassen. Allgemein kann das Gehäuse beispielsweise ein Länge-zu-Breite-Verhältnis von 0,5 bis 2,0, bevorzugt von 0,7 bis 1,6, besonders bevorzugt von 0,85 bis 1,40, höchst bevorzugt von 0,95 bis 1,10, aufweisen. Das Länge-und/oder-Breite-zu-Tiefe-Verhältnis des wenigstens einen Gehäuses kann beispielsweise 6:1 bis 16:1, bevorzugt 8:1 bis 14:1, besonders bevorzugt 10:1 bis 13:1, betragen.

Das wenigstens eine Gehäuse kann beispielsweise eine Befestigungseinrichtung umfassen, mittels der eine stoffschlüssige und/oder formschlüssige und/oder kraftschlüssige Befestigung des künstlichen Quartiers an einem Gegenstand, insbesondere einer Gebäudewand, erfolgen kann. Bevorzugt kann die Befestigungseinrichtung beispielsweise ein an der dem Innenraum des Gehäuses abgewandten Rückwand angeordnetes Befestigungsmittel umfassen. Hierbei kann das Befestigungsmittel beispielsweise als, insbesondere im Endmontagezustand horizontal verlaufende, Halteschiene ausgebildet sein. Die Halteschiene kann sich vorzugsweise über eine überwiegende, insbesondere über die gesamte, Länge des Gehäuses erstrecken. Die Halteschiene kann zumindest abschnittsweise, insbesondere vollständig, eine S- und/oder Z- und/oder U-Form aufweisen, wobei durch den freien Schenkel der Halteschiene bzw. Halteleiste ein Hohlraum ausgebildet wird, in welchen eine gegenstandsseitige, insbesondere gebäudeseitige, Halterung eingreifen kann.

Die Befestigungseinrichtung kann beispielsweise derart ausgebildet sein, dass das Gehäuse vermittels der Befestigungseinrichtung mit einer gegenstandsseitigen, insbesondere gebäudeseitigen (z. B. gebäudewandseitigen), Halterung, bevorzugt formschlüssig, besonders bevorzugt einhängbar, verbindbar ist. So kann z. B. das Gehäuse an dem Gegenstand oder der Gegenstand an dem Gehäuse eingehängt werden.

Die Halterung kann beispielsweise ein mit der Befestigungseinrichtung, insbesondere mit dem Befestigungsmittel, korrespondierendes Halteelement umfassen. Das Halteelement zumindest abschnittsweise, insbesondere vollständig, als Haken, Schraubkopf, Schraubenschaft, Eingriffsschiene oder Ähnliches ausgebildet sein.

Die Befestigungseinrichtung und die Halterung können dabei die Verbindungseinrichtung zum Befestigen des wenigsten einen Gehäuses mit dem Gegenstand, insbesondere mit dem Gebäude, ausbilden. Die Verbindungseinrichtung kann dabei eine in wenigstens einen Freiheitsgrad, insbesondere in sämtliche Freiheitsgrade, fixierte Befestigung ausbilden, d. h. ein Verdrehen und/oder ein Verschieben über beliebige Achsen bzw. in beliebige Richtung kann durch die Verbindungseinrichtung unterbunden werden. Damit kann das wenigstens eine Gehäuse lagefixiert an dem Gegenstand, insbesondere an dem Gebäude, befestigt sein.

In einer bevorzugten optionalen Ausführungsform kann es vorgesehen sein, dass die Befestigungseinrichtung ein erstes und ein weiteres Befestigungsmittel umfasst, wobei ein erstes Befestigungsmittel zumindest überwiegend, insbesondere vollständig, formschlüssig mit einem Gegenstand, insbesondere einer Gebäudeoberfläche, und ein zweites Befestigungsmittel (19) zumindest überwiegend, insbesondere vollständig, kraftschlüssig und/oder vermittels einer Schraubverbindung und/oder vermittels einer Nietverbindung und/oder vermittels eines Splints mit dem Gegenstand, insbesondere einer mit einer Gebäudeoberfläche, befestigbar oder befestigt ist. Hierbei kann das erste und/oder zweite Befestigungsmittel mit einer gegenstandsseitigen, insbesondere mit einer gebäudeseitigen, Halterung zusammenwirken. Beispielsweise wird das Gehäuse über das erste Befestigungsmittel über ein Verhaken bzw. ein Eingriffs- und Gegenelement mit dem Gebäude, insbesondere mit einer Gebäudewandoberfläche, verbunden und das Gehäuse über ein zweites Befestigungsmittel mit dem durch eine beispielsweise punktuell wirkende Befestigung, z. B. Verschraubung, mit dem Gebäude verbunden.

So ist es beispielsweise möglich, an einem Gegenstand, insbesondere an einem Gebäude, eine durchgehende oder teilweise unterbrochene Halteschiene als Halterung zu befestigen, in welche über das gehäuseseitige erste Befestigungsmittel eingehakt wird. Die lagefixierte, insbesondere eine Bewegung des Gehäuses entlang bzw. parallel einer Gebäudewandoberfläche hemmende, Fixierung des Gehäuses kann beispielsweise über das zweite Befestigungsmittel erfolgen. Damit kann es ermöglicht werden, in einem ersten Schritt mehrere Gehäuse an der gegenstandsseitig, insbesondere gebäudeseitig, angeordneten Halteschiene einzuhängen und in einem nachfolgenden Schritt durch das Setzen bzw. Anbringen der zweiten Befestigungsmittel die finale Lagefixierung der einzelnen Gehäuse an dem Gegenstand, insbesondere an dem Gebäude, auszuführen. Dies führt zu einem einfach und komfortabel an ein Gebäude montierbares bzw. anbaubares künstlichen Quartier.

Alternativ oder zusätzlich können die Gehäuse mit einer Einhakleiste versehen sein und in gegenstandsseitig, insbesondere gehäuseseitig, angeordnete oder ausgebildete Gegenelemente eingehakt werden. Auch in diesem Fall können die Gehäuse auf einfache Weise montiert werden, da die ersten Befestigungsmittel eine Bewegbarkeit des Gehäuses entlang einer Linie im eingehakten Zustand ermöglichen, d. h. eine lineare Positionskorrektur des Gehäuses ist im eingehängten Zustand noch möglich. Die finale Lagefixierung kann auch in diesem Fall durch zweite Befestigungsmittel erfolgen, welche in einem zeitlich späteren Montageschritt verbaut oder fixiert werden.

Zur Fixierung einer Halterung an einer, insbesondere mit einer Dämmschicht, versehenen Gebäudewand kann beispielsweise ein hierfür zugelassenes Ankersystem verwendet werden, wie beispielsweise ein Fischer Injektionssystem FIS V/VW oder dergleichen.

Es ist möglich, dass an einer dem Innenraum abgewandten Oberfläche einer Vorderwand und/oder wenigstens einer Seitenwände und/oder eines Dachelements zumindest abschnittsweise, insbesondere vollflächig, ein Abdeckelement, insbesondere eine Abdeckplatte, angeordnet oder ausgebildet ist, bevorzugt ist das Abdeckelement zumindest abschnittsweise, insbesondere vollständig, aus mineralischen Material und/oder Kunststoff und/oder Metall und/oder Kunstharz, insbesondere aufweisend ein Epoxidharz, und/oder Beton ausgebildet. Das Abdeckelement kann witterungsbeständig ausgebildet sein, und die das Abdeckelement tragende Struktur, z. B. der zumindest abschnittsweise aus Holz bestehende Gehäusebestandteil, kann vor direktem Witterungseinfluss geschützt werden. Das Abdeckelement kann kraft- und/oder form- und/oder stoffschlüssig mit der Vorderwand, Seitenwand und/oder einem Dachelement verbunden sein. Bevorzugt ist das Abdeckelement durch eine Klebeverbindung und/oder durch eine Nietverbindung und/oder durch eine Schraubverbindung mit dem das Abdeckelement tragenden Bestandteil des Gehäuses verbunden. Vorzugsweise ist (a) das an Vorderwand und an der wenigstens einen Seitenwand oder (b) das an der Vorderwand und an dem Dachelement oder (c) das an der Seitenwand und an dem Dachelement befestigte Abdeckelement gleichartig oder identisch bzgl. Material und/oder Form ausgebildet.

Das wenigstens eine Abdeckelement kann beispielsweise mittelbar über Verbindungsleisten mit einem flächenhaften Bestandteil des Gehäuses, insbesondere mit einer Vorderwand, einer Seitenwand und/oder einem Dachelement verbunden sein. Vorzugsweise können die Verbindungsleisten im Endmontagezustand eine im Wesentlichen vertikale oder eine vertikale Ausrichtung aufweisen, so dass im Falle des Eintritts von Wasser in den Spaltbereich zwischen dem Abdeckelement und dem flächenhaften Bestandteil des Gehäuses ein Abfließen des Wasser und eine gute Luftzirkulation erzielt werden kann. Dies erhöht die Lebensdauer des künstlichen Quartiers.

Alternativ oder zusätzlich kann es vorgesehen sein, dass an der Schnittstelle zweier nebeneinander angeordneter Gehäuse wenigstens ein Abdeckelement eines Gehäuses zumindest abschnittsweise in den Flächenbereich des danebenliegenden Gehäuses ein- oder überragt bzw. überlappt. Mit einer derartigen Überlappung kann eine bessere Abdichtung des Zwischenraums zweier Gehäuse ermöglicht werden. Allgemein kann hiermit ein Luftzug bzw. eine Luftströmung von außerhalb des künstlichen Quartiers in den Innenraum der Gehäuse reduziert bzw. verhindert werden. Die Verbindungsöffnungen zwischen den aneinander angesetzten Gehäusen bilden potenziell die Gefahr, dass von dort Luft bzw. ein Luftstrom von außerhalb in den Innenraum eines Gehäuses einströmt oder sich ein Luftzug in dem Innenraum ausbildet. Diese Luftbewegungen können ein für die Zieltierart bzw. für die Fledertiere unerwünschte Situation (z. B. Luftzug) im Innenraum schaffen. Mit anderen Worten wird mit einem möglichst keinen derartigen Luftzug in den Innenraum aufweisenden künstlichen Quartier eine gesteigerte Akzeptanz des künstlichen Quartiers als Lebensraum für das Fledertier erreicht.

Es ist möglich, dass in dem Innenraum wenigstens eines Gehäuses zumindest eine wenigstens abschnittsweise zwischen einer Vorderwand und einer Rückwand des Gehäuses, insbesondere eine im Wesentlichen parallel zu einer Vorderwand und/oder einer Rückwand des Gehäuses verlaufende, Zwischenwand angeordnet oder ausgebildet ist, welche den Innenraum in einen ersten und einen weiteren Innenraumteilbereich unterteilt, bevorzugt weist die Zwischenwand wenigstens eine Durchtrittsöffnung auf, welche den ersten und den weiteren Innenraumteilbereich miteinander verbindet. Die Zwischenwand kann eine unterschiedliche, bevorzugt geringere, Dicke aufweisen als die Vorderwand und/oder als die Rückwand. Die Zwischenwand kann zumindest abschnittsweise, insbesondere vollständig, beispielsweise im Wesentlichen parallel zu der Vorderwand und/oder einer Rückwand ausgerichtet bzw. geformt sein. Eine im Wesentlichen parallele Ausrichtung kann z. B. dadurch gegeben sein, dass die Zwischenwand in einem Winkel von maximal +/- 5° zu der Vorderwand und/oder der Rückwand ausgerichtet ist.

Die Innenraumteilbereiche können alternativ oder zusätzlich derart miteinander über wenigstens eine Durchtrittsöffnung miteinander verbunden sein, dass ein Fledertier durch Hindurchtreten bzw. Hindurchbewegen durch die Durchtrittsöffnung von einem ersten zu einem weiteren Innenraumteilbereich gelangen kann. Die wenigstens eine Durchtrittsöffnung kann beispielsweise als Langloch ausgebildet sein und/oder eine zumindest abschnittsweise ovale und/oder eine kreisrunde und/oder eine elliptische und/oder eine polygonale Form aufweisen.

Es ist ebenso möglich, dass zumindest ein Gehäuse wenigstens zwei Zwischenwände umfasst. Damit kann beispielsweise ein erster Innenraumteilbereich über eine erste Zwischenwand zu einem zweiten Innenraumteilbereich abgetrennt sein und ein zweiter Innenraumteilbereich kann durch eine zweite Zwischenwand von einem dritten Innenraumteilbereich abgetrennt bzw. abgegrenzt sein. Hierbei können optional einzelne oder sämtliche Zwischenwände jeweils wenigstens eine Durchtrittsöffnung aufweisen, so dass ein Fledertier von einem ersten Innenraumbereich in einen beliebigen benachbarten weiteren Innenraumbereich des Gehäuses, durch Hindurchbewegen durch entsprechende Durchtrittsöffnungen, gelangen kann. Diese Bewegung des Fledertiers von beliebigen Innenraumteilbereichen zu beliebigen weiteren Innenraumteilbereichen kann dabei erfolgen, ohne dass das Fledertier eine Einflug- und/oder Ausflugöffnung passiert. Mit anderen Worten kann sich das Fledertier innerhalb definierter, insbesondere sämtlicher, Innenraumteilbereiche eines künstlichen Quartiers bewegen, ohne dieses verlassen zu müssen.

Es ist möglich, dass (a) die Höhe einer Vorderwand des Gehäuses geringer ist als die Höhe einer Rückwand des Gehäuses und/oder (b) die Höhe einer Vorderwand des Gehäuses geringer ist als die Höhe einer Zwischenwand des Gehäuses. Bevorzugt ist die Vorderwand zur benachbarten Zwischenwand und/oder zur Rückwand um 15 bis 300 mm, besonders bevorzugt um 35 bis 200 mm, höchst bevorzugt um 40 bis 130 mm, verkürzt. Dadurch kann beispielsweise ein gestufter Aufbau erreicht werden, insbesondere dann, wenn die Vorderwand mit der Rückwand und/oder mit der Zwischenwand an einer Endseite, insbesondere mit der Oberseite (d. h. mit der im Endmontagezustand geodätisch höher gelegenen Seite bzw. Oberkante des Gehäuses), bündig abschließt. Dieser gestufte Aufbau ermöglicht es, den Fledertieren einen flächigen Ein- und/oder Ausflugbereich zur Verfügung zu stellen. Auch können durch den gestuften Aufbau die Fledertiere die jeweiligen Innenraumteilbereiche durch Ansteuern der jeweiligen durch die unterschiedlichen Stufen bzw. unterschiedlichen Höhen definierten und/oder identifizierbaren Öffnungen der jeweiligen Innenraumteilbereiche diese erleichtert ansteuern bzw. identifizieren.

Zudem ermöglicht der gestufte Aufbau der Unterseite des künstlichen Quartiers dessen harmonisches Einbinden an eine Gebäudefassade, da die Unterseite des künstlichen Quartiers keinen zu harten, sondern gestuften, Kantensprung aufweist und sich hiermit harmonischer in eine bestehende Bebauung, z. B. eines Gebäudes, einfügt.

Die gestufte Form bzw. die unterschiedlichen Höhenunterschiede der Vorderwand, der wenigstens einen Zwischenwand und/oder der Rückwand sind vorzugsweise zumindest abschnittsweise, insbesondere vollständig, über die gesamte Länge des ggf. aus mehreren Gehäusen gebildeten künstlichen Quartiers gegeben bzw. vorliegend. Beispielsweise weisen sämtliche aneinandergesetzte Gehäuse eine einheitliche bzw. identische Höhe für die Vorderwand und eine unterschiedliche und für wenigstens zwei, insbesondere sämtliche, Zwischenwände einheitliche bzw. identische Höhe für die Zwischenwände wenigstens zweier, insbesondere sämtlicher, Gehäuse des künstlichen Quartiers auf.

Eine Zwischenwand kann eine beispielsweise zwischen einer Vorderwand und einem Gegenstand, insbesondere einem Gebäude, und/oder zwischen einer Vorderwand und einer Rückwand platzierte, insbesondere parallel zur Vorder- und/oder Rückwand verlaufende, Wand des Gehäuses sein.

Die stufenartige Form des Gehäuses bzw. der Wände des Gehäuses können beispielsweise derart ausgebildet sein, dass sich wenigstens zwei Stufen des Gehäuses unterscheiden. D. h. z. B., dass eine erste Stufe, die durch eine Vorderwand zu einer Zwischenwand gebildet wird eine Verkürzung von 25 bis 75 mm, bevorzugt von 35 bis 65 mm, besonders bevorzugt von 45 bis 55 mm, und eine zweite Stufe, die durch eine Zwischenwand zu einer Rückwand gebildet wird eine Verkürzung von 50 mm bis 150 mm, bevorzugt 65 bis 135 mm, besonders bevorzugt 85 bis 115 mm, umfasst.

Alternativ oder zusätzlich kann es beispielsweise vorgesehen sein, dass eine erste Verkürzung bzw. Stufe zwischen einer Vorderwand und einer Zwischenwand um den Faktor 0,25 bis 0,75, bevorzugt um den Faktor 0,40 bis 0,60, kürzer ist als eine zweite Verkürzung bzw. Stufe zwischen einer Zwischenwand und einer weiteren Zwischenwand und/oder einer Rückwand.

In einer vorteilhaften Ausführungsform kann es optional vorgesehen sein, eine Vorderwand und/oder eine Rückwand und/oder wenigstens eine Seitenwand, insbesondere sämtliche Seitenwände, und/oder ein Dachelement des Gehäuses aus einem Holz umfassenden Material und/oder einem mehrlagigen Material ausgebildet ist oder sind, bevorzugt aus einem mehrlagigen Holz umfassenden Material ausgebildet ist oder sind, besonders bevorzugt aus einem dreilagigen Holz umfassenden Material ausgebildet ist oder sind. Ein mehrlagiges Holzmaterial kann beispielsweise einen Mehrschichtaufbau umfassen, wobei wenigstens eine Schicht, insbesondere sämtliche Schichten aus Nadelholz und/oder Laubholz ausgebildet sind. Bevorzugt kann wenigstens eine, insbesondere sämtliche Schichten, wenigstens teilweise Fichte und/oder Kiefer und/oder Lärche und/oder Douglasie und/oder Zirbe und/oder Ahorn und/oder Birke und/oder Buche und/oder Eiche und/oder Erle und/oder Esche und/oder Kirschbaum umfassen.

Es kann optional vorgesehen sein, dass im Falle eines wenigstens drei Schichten aufweisenden Aufbaus, eine Innenlage eine unterschiedliche (Faser-)Ausrichtung aufweisen kann als zumindest eine Decklage. Bevorzugt werden zwei zueinander parallel verlaufende Decklagen mit einer um 20 bis 160°, bevorzugt um 45 bis 135°, besonders bevorzugt um 75 bis 105°, höchst bevorzugt um ca. 90° versetzte Innenlage angeordnet bzw. befestigt, insbesondere verleimt. Der Winkelversatz der Innenlage zu wenigstens einer Decklage führt zu einem Absperreffekt und damit zu einer gesteigerten Steifigkeit und/oder Festigkeit der entsprechend ausgebildeten Wand des Gehäuses.

Ein Vorteil der Verwendung von Holz zumindest teilweise, insbesondere vollständig, aufweisenden Oberflächen der wenigstens einen Wand des Gehäuses ist in der Oberflächenrauheit der entsprechenden Wandung zu sehen. Eine zumindest Holz als Bestandteil umfassende Oberfläche kann die Griffigkeit für die Fledertiere und damit deren Akzeptanz des künstlichen Quartiers erhöhen. Es ist hierbei beispielsweise möglich, zumindest abschnittsweise, insbesondere vollständig, die Oberfläche des Holzes aufzurauen, hierbei können materialabtragende Aufrauverfahren angewandt werden. Beispielsweise wird die Oberfläche zumindest abschnittsweise, insbesondere vollständig, mit einer Bürste, bevorzugt einer Metallbüste, gebürstet. Dabei kann das Bürsten zumindest abschnittsweise, insbesondere nahezu überwiegend, entlang einer Holzmaserung der Holzoberfläche erfolgen. Dabei können weichere, zwischen härteren Bereichen der Holzoberfläche angeordnete oder ausgebildete Bereich herausgebürstet werden. Hierbei geht eine Vergrößerung der Oberfläche durch eine Bildung einer "Tal-und-Berg-Struktur" einher, Auch kann dadurch zumindest abschnittsweise die Rauigkeit der Oberfläche beeinflusst werden. Es hat sich herausgestellt, dass eine gebürstete Holzoberfläche von Fledertieren, insbesondere von Fledermäusen, bevorzugt angenommen wird. Folglich können entsprechende Oberflächen, insbesondere entsprechende in den Innenraum des Gehäuses weisende Oberflächen, die Akzeptanz bzw. die Annahme des künstlichen Quartiers für Fledertiere signifikant erhöhen.

Die Gesamtdicke einer Wand, d. h. z. B. der Vorderwand, der Rückwand, wenigstens einer Seitenwand und/oder des Dachelements kann beispielsweise 5 bis 55 mm, bevorzugt 10 bis 45 mm, besonders bevorzugt 12 bis 43 mm, betragen. Die Dicke einer Decklage kann alternativ oder zusätzlich bevorzugt 1 bis 15 mm, bevorzugt 2 bis 12 mm, besonders bevorzugt 3 bis 10 mm, umfassen.

Das Verhältnis von Decklagendicke zu Gesamtdicke wenigstens einer Wand, insbesondere sämtlicher Wände, des Gehäuses kann beispielsweise im Bereich von 1:2 bis 1:6, bevorzugt von 1:3 bis 1:5, besonders bevorzugt von 1:3,4 bis 1:4,5 liegen.

Das Holz umfassende Material kann beispielsweise auch Holzfasermaterial umfassen, d. h. Material das zum Teil aus Holz und zum Teil aus nicht-HolzMaterial besteht. Beispielsweise kann ein Naturfaser-Verbundwerkstoff mit einem Holzanteil von 20 bis 95 %, bevorzugt mit einem Holzanteil von 60 bis 80 %, verwendet werden.

Das Dachelement kann ausschließlich oder zusätzlich eine Dachabdeckung umfassen, welche zumindest abschnittsweise wenigstens eine Seitenwand, eine Rückwand und/oder eine Vorderwand zumindest teilweise umgreift. Die Dachabdeckung kann hierbei zumindest abschnittsweise, insbesondere vollständig, aus einem witterungsbeständigen Material ausgebildet sein, beispielsweise aus Metall, insbesondere aus Edelstahl, verzinktem Blech oder Kupfer. Alternativ oder zusätzlich kann eine Dachabdeckung zumindest abschnittsweise, insbesondere vollständig, aus Kunststoff, aus Beton und/oder aus einem mineralischen Material gebildet sein.

Beispielsweise kann die Dachabdeckung nach der Montage wenigstens zweier Gehäuse an einem Gegenstand, insbesondere an einer Gebäudewand, montiert werden. Hierbei kann die Dachabdeckung derart ausgebildet sein, dass sich diese, bevorzugt einstückig, über wenigstens zwei Gehäuse zumindest abschnittsweise, insbesondere vollständig, erstreckt. Damit kann insbesondere der Übergangsbereich zweier Gehäuse durch die Dachabdeckung überbrückt bzw. abgedeckt werden. In einer besonders vorteilhaften Ausführungsform kann es vorgesehen sein, dass sich die Dachabdeckung über wenigstens drei, bevorzugt über sämtliche, Gehäuse eines bzgl. der Übertrittsmöglichkeit der Gehäuseinnenräume zusammenhängenden künstlichen Quartiers zumindest abschnittsweise, insbesondere vollständig, erstreckt. So können in einem ersten Verfahrensschritt sämtliche Gehäuse eines künstlichen Quartiers an einen Gegenstand, insbesondere an einer Gebäudewand, montiert und fixiert werden. Danach kann beispielsweise die Montage des die Gehäuse zumindest oberseitig übergreifenden Dachabdeckung erfolgen.

Die Vorderwand und/oder die Rückwand und/oder wenigstens eine Zwischenwand und/oder wenigstens eine Seitenwand und/oder ein Dachelement kann beispielsweise zumindest abschnittsweise aus einer Holzwolle-Leichtbauplatte bestehen bzw. eine solche umfassen. Die Holzwolle-Leichtbauplatte kann beispielsweise aus Heraklith, insbesondere aus Heraklith C, oder dergleichen bestehen.

Es ist möglich, dass der, insbesondere konstante, Abstand (a) einer Vorderwand zu einer Rückwand und/oder (b) einer Vorderwand zu einer Zwischenwand und/oder (c) einer ersten Zwischenwand zu einer benachbarten Zwischenwand und/oder (d) einer Zwischenwand zu einer Rückwand und/oder (e) einer Vorderwand zu einer Gebäudefläche im Endmontagezustand des künstliches Quartiers und/oder (f) einer Zwischenwand zu einer Gebäudefläche im Endmontagezustand des künstliches Quartiers zwischen 13 bis 29 mm, bevorzugt zwischen 15 bis 27 mm, besonders bevorzugt zwischen 17 bis 25 mm, höchst bevorzugt ca. 20 mm beträgt. Diese Abstände können sich für die Akzeptanz der künstlichen Quartiere durch die Fledertiere als günstig erweisen. Der Abstand einer Vorderwand kann dabei beispielsweise zu einer Zwischenwand und von einer oder von derselben Zwischenwand zu der Rückwand unterschiedlich sein. Bevorzugt ist der Abstand der Rückwand zur Zwischenwand größer als der Abstand einer oder derselben Zwischenwand zur Vorderwand. Die unterschiedlichen Abstände ermöglichen es den Fledertieren die jeweiligen Innenraumteilbereiche einfacher zu identifizieren und diese gezielt anzusteuern. Der Abstand einer Vorderwand zu einer Zwischenwand kann beispielsweise ca. 18 mm und der Abstand von der Zwischenwand zu einer Rückwand kann beispielsweise ca. 24 mm betragen.

Es kann sich als vorteilhaft erweisen, wenn (a) zwischen einer Vorderwand und einer Rückwand und/oder (b) zwischen einer Vorderwand und einer benachbarten Zwischenwand und/oder (c) zwischen einer Rückwand und einer benachbarten Zwischenwand und/oder (d) zwischen einer ersten und einer weiteren benachbarten Zwischenwand und/oder (e) in einem durch das Gehäuse definierten Innenraum des Gehäuses, wenigstens ein Ableitungselement angeordnet ist. Bevorzugt bildet das wenigstens eine Ableitungselement eine Verbindung zwischen der Vorderwand und der Rückwand und/oder zwischen der Vorderwand und einer benachbarten Zwischenwand und/oder zwischen einer Rückwand und einer benachbarten Zwischenwand und/oder zwischen einer ersten und einer weiteren benachbarten Zwischenwand und/oder zwischen einer Vorderwand und einer benachbarten Gebäudefläche im Endmontagezustand des künstliches Quartiers und/oder zwischen einer Zwischenwand und einer benachbarten Gebäudefläche im Endmontagezustand des künstliches Quartiers. Das Ableitungselement kann zur Stabilisierung des Gehäuses bzw. des künstlichen Quartiers dienen, da die die Innenräume bildenden Wände neben randseitigen Verbindungen zusätzlich durch die Ableitungselemente verbunden sein können. Alternativ oder zusätzlich kann das wenigstens eine Ableitungselement dazu dienen, dass von innerhalb des wenigstens einen Innenraums sich aufhaltenden Fledertieren ausgesonderte Fäkalien durch die Ableitungselemente eine gezielte Lenkung bzw. Führung während des schwerkraftbedingen Fallens aus dem Innenraum erfahren. Diese Lenkung bzw. Führung führt dabei zu geodätisch tieferliegenden Innenraumorten, welche "geschützt" vor herabfallenden Fäkalien liegen, so dass diese Orte für Fledertiere akzeptierbare Ruheorte darstellen können.

Sofern wenigstens ein Ableitungselement eine Verbindung der Oberflächen von benachbarten Wänden ausbildet, kann damit die Stabilität des Gehäuses und/oder des künstlichen Quartiers positiv beeinflusst werden. Beispielsweise kann sich wenigstens ein Ableitungselement von einer ersten Oberfläche einer Wand zu einer weiteren Oberfläche einer weiteren Wand ohne Unterbrechung erstrecken und durch die geschlossene Kontur die Stabilität des Gehäuses positiv beeinflussen.

Sofern in unterschiedlichen Höhenlagen sich jeweils wenigstens ein Ableitungselement befindet, können diese derart angeordnet sein, dass die ableitungselementfreien Stellen unterschiedlicher Höhenlagen derart angeordnet sind, dass diese in einem vertikal verlaufenden Kanal bzw. Freiraum angeordnet oder ausgebildet sind. Damit wird es erreicht, dass aus der geodätisch höherliegenden Lage herabfallende Elemente, z. B. Fäkalien, ohne den Kontakt mit weiteren geodätisch tieferliegenden Ableitungselementen aus dem Gehäuse herausfallen können. Dabei können die Elemente, z. B. Fäkalien, aus dem unten angeordneten Einflug- und Ausflugöffnung aus dem Gehäuse und damit aus dem künstlichen Quartier austreten. Die unterschiedlichen geodätischen Höhenlagen können beispielsweise auch einen unterschiedlichen Abstand des jeweiligen Ableitungselements zu einem Dachelement definieren.

Wenigstens ein Ableitungselement kann den Innenraum beispielsweise in einen ersten und einen zweiten Innenraumunterbereich unterteilen.

In einer beispielhaften Ausführungsform kann es optional vorgesehen sein, dass ein erstes Ableitungselement in einem ersten Abstand zu einem Dachelement angeordnet oder ausgebildet ist und ein zweites Ableitungselement in einem zum ersten Abstand unterschiedlichen Abstand zum Dachelement angeordnet oder ausgebildet ist. Hierbei kann das erste Ableitungselement in einem ersten, insbesondere zwischen einer Vorderwand und einer Zwischenwand angeordneten, Innenraumteilbereich angeordnet oder ausgebildet sein und das zweite Ableitungselement in einem zweiten, insbesondere zwischen einer Zwischenwand und einer Rückwand des Gehäuses oder zwischen einer Zwischenwand und einer Wand des Gegenstands, angeordneten, Innenraumteilbereich angeordnet oder ausgebildet sein.

Ferner kann es optional vorgesehen sein, dass wenigstens eine Oberfläche des Ableitungselements zumindest abschnittsweise, insbesondere vollständig, einen Winkel mit einer im Endmontagezustand des Gehäuses horizontal verlaufenden Horizontallinie einschließt, insbesondere schließt die dem Dachelement zugewandte Oberfläche des Ableitungselements bzw. die nach oben gerichtete Oberfläche des Ableitungselements zumindest abschnittsweise, insbesondere vollständig, einen Winkel α von 10 bis 80°, bevorzugt einen Winkel α von 30° bis 60°, besonders bevorzugt einen Winkel α von 40° bis 50°, höchst bevorzugt einen Winkel α von ca. 45°, mit einer im Endmontagezustand des künstliches Quartiers horizontal verlaufenden Horizontallinie ein. Durch einen Winkel α, insbesondere durch einen spitzen Winkel α zur Horizontallinie kann ein Ableiten bzw. ein Abführen von auf die entsprechend geneigte Oberfläche gelangender Elemente, insbesondere Fäkalien, zu einem tieferliegenden Ort ausgeführt werden. Mit anderen Worten wird durch eine entsprechende Neigung von zumindest Abschnitten der Oberfläche von wenigstens einem Ableitungselement erreicht, dass auf das Ableitungselement von oben auftreffende Elemente, insbesondere Fäkalien, nicht auf dem Ableitungselement liegen bleiben, sondern schwerkraftbedingt sich nach außerhalb des Gehäuses bewegen.

Es kann sich als zweckmäßig erweisen, wenn zumindest abschnittsweise, insbesondere vollständig, die dem Innenraum zugewandte Oberfläche des Gehäuses, insbesondere die dem Innenraum zugewandte Oberfläche einer Vorderwand und/oder einer Rückwand und/oder wenigstens einer Zwischenwand und/oder wenigstens einer Seitenwand und/oder eines Dachelements eine raue Oberflächenstruktur aufweist bzw. aufweisen. Bevorzugt umfasst die raue Oberflächenstruktur eine Rauheit die rauer ist als eine gehobelte Holzoberfläche, bevorzugt ist die Rauheit der Oberflächenstruktur rauer oder gleichrau als bzw. wie eine sägeraue Holzoberfläche. Alternativ oder zusätzlich kann die raue Oberflächenstruktur eine Rauheit aufweisen, die vergleichbar mit einer gebürsteten Holzoberfläche ist, bevorzugt einer mit einer Metallbürste, besonders bevorzugt mit einer Stahlbürste, gebürstete Holzoberfläche. Hierbei kann die Bürste zumindest überwiegend entlang bzw. parallel zu einer Holzmaserung bewegt werden, damit weichere Holzbestandteile aus der Holzoberfläche herausgetrennt werden können, um eine größere Oberfläche zu bilden. Die weicheren Holzbestandteile, auch Frühholz genannt, können durch den Bürst-Prozess aus der Oberfläche herausgetrennt werden, wobei das härtere Spätholz dem Bürsteneingriff überwiegen, insbesondere vollständig, widersteht und an der Oberfläche verbleibt. Damit ergibt sich eine aufgeraute Oberfläche, wobei zwischen benachbarten Spätholzbereichen (z. B. Jahresringen) eine Senke durch das herausgetrennte Frühholz ausgebildet wird. Die aufgeraute Oberflächenstruktur kann dabei beispielsweise auch den außerhalb des Innenraums angeordneten Flächenbereich der entsprechenden Wände umfassen. Die raue Oberflächenstruktur ermöglicht es, dass Fledertiere, insbesondere Fledermäuse, sich an dieser Oberflächenstruktur vereinfacht festhalten bzw. festhaken können. Dies erhöht die Attraktivität des künstlichen Quartiers für die Zieltierart.

Alternativ oder zusätzlich kann es beispielsweise vorgesehen sein, im Bereich der Verbindungsöffnung an der dem Innenraum des Gehäuses abgewandten Oberfläche des wenigstens eines Gehäuses, insbesondere beider Gehäuse, ein Dichtelement anzuordnen. Bevorzugt wird das Dichtelement im Endmontagezustand komprimierend und/oder dichtend zwischen den beiden Gehäusen aufgenommen und/oder angeordnet, welche über deren jeweilige Verbindungsöffnungen derart miteinander verbunden sind, dass der Innenraum des ersten Gehäuses mit dem Innenraum des weiteren Gehäuses verbunden ist. Mit anderen Worten wird an der Schnittstelle zweier angrenzender Gehäuse, welche über deren jeweilige Verbindungsöffnungen miteinander verbunden werden sollen oder verbunden sind zumindest ein Dichtelement angeordnet, welches die Bildung etwaiger Spalten verhindern soll und/oder die Form und/oder Dimension bzw. die Größe etwaiger Spalten reduzieren soll. Damit kann eine spaltverkleinernde und/oder spaltausschließende Verbindung zwischen der Verbindungsöffnung eines ersten Gehäuses mit der Verbindungsöffnung eines weiteren Gehäuses ausgebildet werden und damit die Akzeptanz des künstlichen Quartiers für Fledertiere, insbesondere für Fledermäuse, erhöht werden. Die einander zugeordneten Verbindungsöffnungen können korrespondierende Öffnungen aufweisen, welche ein Verbinden des ersten Innenraums eines ersten Gehäuses mit dem weiteren Innenraum eines weiteren Gehäuses unter Ausschluss und/oder Reduzierung eines Gaseintritts und/oder eines Lichteintritts ermöglicht. Das Dichtelement kann derart elastisch ausgebildet und/oder derart vorgespannt zwischen zwei Gehäusen verbaut und/oder angeordnet oder ausgebildet sein, dass ein etwaiger materialbedingter Verzug, d. h. z. B. etwaige Materialausdehnungen des Gehäuses, welches eine Spaltbildung im Bereich der Verbindungsöffnungen hervorrufen könnte, derart kompensiert werden, dass der Bereich um die Verbindungsöffnungen Licht- und/oder Gasundurchlässig bleibt. Als Dichtelement kann beispielsweise ein selbstklebendes Komprimierungsband verwendet werden. Alternativ oder zusätzlich kann als Dichtelement ein schaumgummiartiges Dichtmaterial verwendet werden.

Das Dichtelement kann beispielsweise elastische Eigenschaften aufweisen und zumindest teilweise, insbesondere vollständig, aus Kunststoff und/oder Gummi ausgebildet sein.

Neben dem künstlichen Quartier betrifft die Erfindung auch eine Anordnung umfassend ein aus wenigstens zwei Gehäusen bestehendes und hierin beschriebenes künstliches Quartier, wobei Innenräume der wenigstens zwei Gehäuse über gehäuseseitige Verbindungsöffnungen miteinander, insbesondere unmittelbar, verbindbar oder verbunden sind.

Auch betrifft die Erfindung ein Verfahren zur Herstellung bzw. Bildung eines künstlichen Quartiers für Fledertiere, insbesondere Fledermäuse, umfassend ein hierin beschriebenes künstliches Quartier, wobei ein erstes und ein zweites Gehäuse an einer Gebäudefläche, z. B. einer Gebäudefassade, montiert wird und die Innenräume des ersten und des weiteren Gehäuses zumindest im Endmontagezustand über gehäuseseitige Verbindungsöffnungen miteinander, insbesondere unmittelbar, verbunden oder verbindbar sind.

Sämtliche Vorteile, Einzelheiten, Ausführungen und/oder Merkmale des erfindungsgemäßen künstlichen Quartiers sind auf die erfindungsgemäße Anordnung und auf das erfindungsgemäße Verfahren übertragbar bzw. anzuwenden.

Die Erfindung ist anhand von Ausführungsbeispielen in den Zeichnungen näher erläutert. Dabei zeigt:

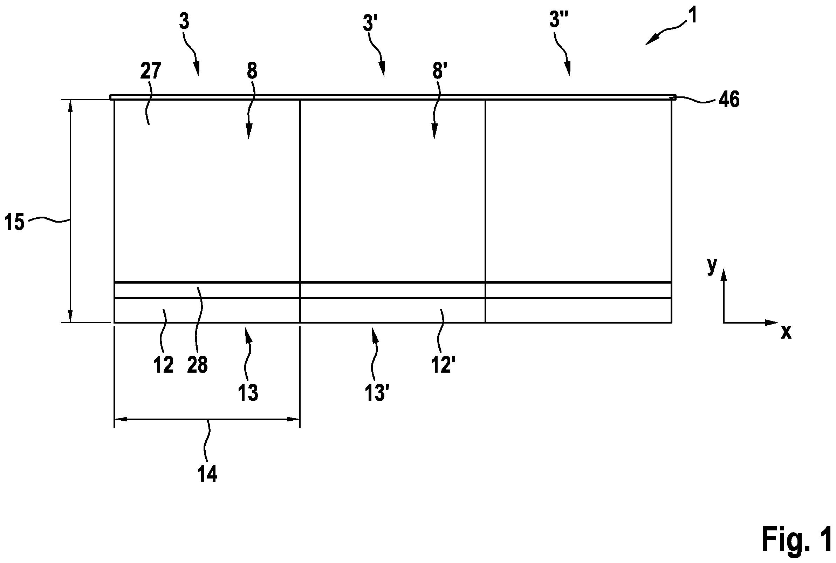

Fig. 1 eine Prinzipdarstellung eines künstlichen Quartiers in der Vorderansicht, bestehend aus drei Gehäusen gemäß einem Ausführungsbeispiel;
Fig. 2 eine Prinzipdarstellung in einer Vollschnittansicht eines an einer Gebäudewand montierten künstlichen Quartiers im Querschnitt gemäß einem Ausführungsbeispiel;
Fig. 3 eine Prinzipdarstellung in einer Vollschnittansicht eines künstlichen Quartiers im Querschnitt gemäß einem Ausführungsbeispiel;
Fig. 4 eine Prinzipdarstellung eines Befestigungsmittels zur Befestigung eines künstlichen Quartiers an einer Wand gemäß einem Ausführungsbeispiel;
Fig. 5 eine Prinzipdarstellung eines Innenraums eines künstlichen Quartiers gemäß einem Ausführungsbeispiel;
Fig. 6 eine Prinzipdarstellung eines Übergangsbereichs zweier aneinander angrenzender Gehäuse eines künstlichen Quartiers.

In den Figuren ist ein künstliches Quartier 1 für wenigstens ein Fledertier (nicht dargestellt), insbesondere für wenigstens eine Fledermaus, dargestellt. Dieses künstliche Quartier 1 umfasst ein zumindest abschnittsweise einen Innenraum 2, 2' umgebendes Gehäuse 3, 3', 3", wobei das Gehäuse 3, 3', 3" über eine Verbindungseinrichtung 4 an einem Gegenstand, insbesondere einem Gebäude 5, befestigbar ist. Der Innenraum 2, 2` kann durch das Gehäuse 3, 3', 3" ausschließlich oder zum Teil umschlossen bzw. definiert werden. Alternativ kann das Gehäuse 3, 3', 3" gemeinsam mit einem über die Verbindungseinrichtung 4 mit dem Gehäuse 3, 3', 3" befestigten Gegenstand, insbesondere mit einem Abschnitt des Gebäudes 5, den Innenraum 2, 2` umschließen bzw. definieren.

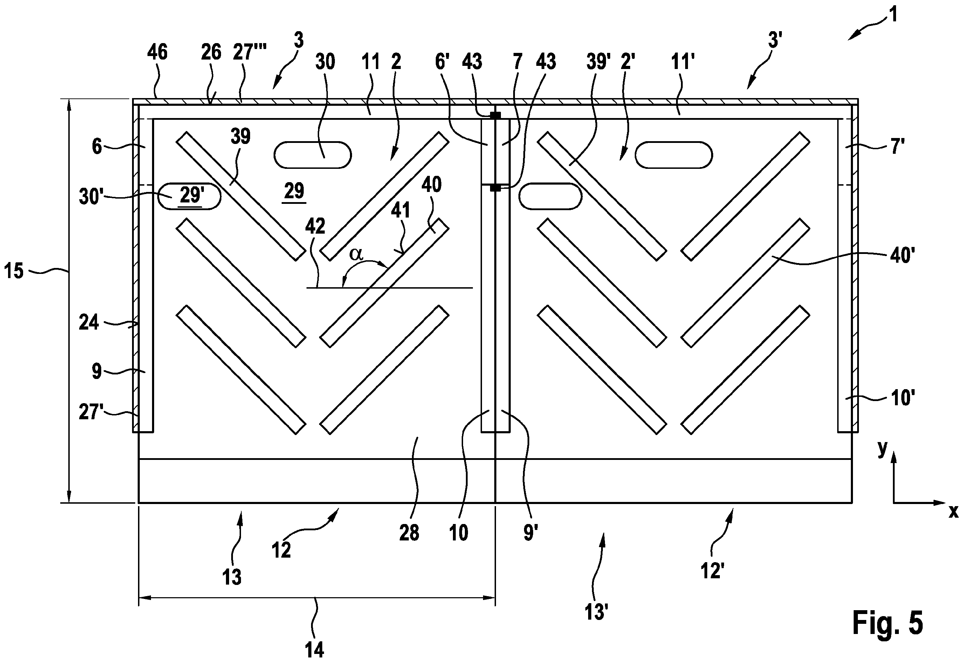

Insbesondere in der in Figur 5 gezeigten aufgebrochenen bzw. eine Vorderwand 8, 8' entbehrenden Darstellung des künstliches Quartier 1 ist ersichtlich, dass ein erstes, einen ersten Innenraum 2 zumindest abschnittsweise umgebendes Gehäuse 3 und ein weiteres, einen weiteren Innenraum 2' zumindest abschnittsweise umgebendes Gehäuse 3' vorgesehen sein kann, wobei das erste und das weitere Gehäuse 3, 3' jeweils eine Verbindungsöffnung 6, 6', 7, 7' umfassen kann und zumindest in einem Endmontagezustand des künstlichen Quartiers 1 der erste Innenraum 2 und der weitere Innenraum 2` über die Verbindungsöffnungen 6', 7, insbesondere unmittelbar, miteinander verbindbar oder verbunden sind. Die in diesem dargestellten Fall nicht genutzten Verbindungsöffnungen 6, 7' können durch Verschlussmittel (nicht dargestellt) verschließbar oder verschlossen sein.

In der in den Figuren dargestellten Ausführungsform sind die Gehäuse 3, 3', 3" flächenhaft bzw. panelartig ausgebildet und an deren Schmalseiten, d. h. mit deren in der Y-Z-Ebene liegenden Oberflächen miteinander über die Verbindungsöffnungen 6, 6', 7, 7' verbunden, vgl. Figur 5. Alternativ oder zusätzlich kann wenigstens ein Gehäuse 3, 3', 3", insbesondere sämtliche Gehäuse 3, 3', 3", wenigstens eine Verbindungsöffnung 6, 6', 7, 7' an der Vorder- und/oder Rückwand 8, 8', 12, 12' aufweisen. Damit wird es ermöglicht, dass zwei Gehäuse 3, 3', 3" an deren Haupterstreckungsseiten bzw. Haupterstreckungsoberflächen, d. h. z. B. an deren in der X-Y-Ebene liegenden Flächen, miteinander verbunden sind. Mit anderen Worten können die panelartigen Gehäuse 3, 3', 3" nebeneinanderliegend und/oder übereinanderliegend angeordnet werden. Die wenigstens eine Verbindungsöffnung 6, 6', 7, 7' eines Gehäuses 3, 3', 3" kann bevorzugt in wenigstens zwei, insbesondere in sämtlichen, Wänden 8, 8`, 9, 9', 10, 10', 11, 11', angeordnet oder ausgebildet sein. Die nicht für das zu bildende künstliche Quartier 1, 1' benötigten Verbindungsöffnungen 6, 6`, 7, 7` können über ein Verschlussmittel (nicht dargestellt) verschlossen werden. Damit kann beispielsweise ein Gehäuse 3, 3', 3" bereitgestellt werden, das sowohl eine nebeneinander Anordnung (Kontaktfläche mit weiterem Gehäuse in Y-Z-Ebene liegend) als auch optional eine übereinander Anordnung (Kontaktfläche in X-Y-Ebene liegend) ermöglicht. Folglich können mit einem Gehäusetyp unterschiedliche Anordnungen bzw. Formen des künstlichen Quartiers 1, 1' geschaffen werden.

Ein in dem ersten Innenraum 2 befindliches Fledertier kann durch die Verbindungsöffnungen 6' des ersten Gehäuses 3 und durch die Verbindungsöffnung 7 des weiteren Gehäuses 3' in den Innenraum 2` des weiteren Gehäuses 3' gelangen, ohne dass das Fledertier das künstlichen Quartiers 1 z. B. über eine Einflug- und/oder Ausflugöffnung 13, 13' verlässt.

Ein erster Innenraum 2 kann beispielsweise durch (a1) eine Vorderwand 8, (b1) eine erste Seitenwand 9, (c1) eine zweite Seitenwand 10 und (d1) ein Dachelement 11 des ersten Gehäuses 3 und (e1) eine Rückwand 12 des ersten Gehäuses 3 oder eine Fläche (nicht dargestellt) des über die Verbindungseinrichtung 4 mit dem Gehäuse 3, 3', 3" befestigten Gegenstands, insbesondere des Gebäudes 5, gebildet werden. Analog hierzu kann alternativ oder zusätzlich ein weiterer Innenraum 2' durch (a2) eine Vorderwand 8', (b2) eine erste Seitenwand 9', (c2) eine zweite Seitenwand 10' und (d2) ein Dachelement 11' des weiteren Gehäuses 3' und (e2) eine Rückwand 12' des weiteren Gehäuses 3' oder eine Fläche (nicht dargestellt) des über die Verbindungseinrichtung 4 mit dem weiteren Gehäuse 3' befestigten Gegenstands, insbesondere des Gebäudes 5, gebildet werden, wobei der erste Innenraum 2 und/oder der weitere Innenraum 2' durch eine an dem ersten und/oder weiteren Gehäuse 3, 3', 3", insbesondere im Endmontagezustand an einem geodätisch tief liegenden Ort des ersten und/oder weiteren Gehäuses 3, 3', 3", angeordnete oder ausgebildete Einflug- und/oder Ausflugöffnung 13, 13' für das wenigstens eine Fledertier zugänglich ist. Die Einflug- und/oder Ausflugöffnung 13, 13' befindet sich vorteilhafterweise in der unteren Hälfte, insbesondere am unteren Ende, bzw. an der geodätisch tiefer liegenden Hälfte, insbesondere am geodätisch tief liegenden Ende, des künstlichen Quartiers 1 zumindest in dessen Endmontagezustand bzw. in dessen bestimmungsgemäßen Gebrauch.

Das erste und/oder weitere Gehäuse 3, 3`, 3" kann, wie in den Figuren beispielhaft dargestellt, eine flächenhafte und/oder panelartige, insbesondere quaderartige, Form aufweisen, deren Länge 14 und/oder Höhe 15 wenigstens dem Zweifachen, bevorzugt wenigstens dem Vierfachen, besonders bevorzugt wenigstens dem Siebenfachen, höchst bevorzugt wenigstens dem Neunfachen, der Tiefe 16 des Gehäuses 3, 3', 3" entsprechen oder entspricht. In den Figuren ist ein Koordinatensystem dargestellt, wobei die Länge 14 eine Erstreckung des Gehäuses 3, 3', 3" im Wesentlichen in Richtung der X-Achse, die Höhe 15 eine Erstreckung des Gehäuses 3, 3', 3" im Wesentlichen in Richtung der Y-Achse und die Tiefe 16 eine Erstreckung des Gehäuses 3, 3', 3" im Wesentlichen in Richtung der Z-Achse beschreiben.

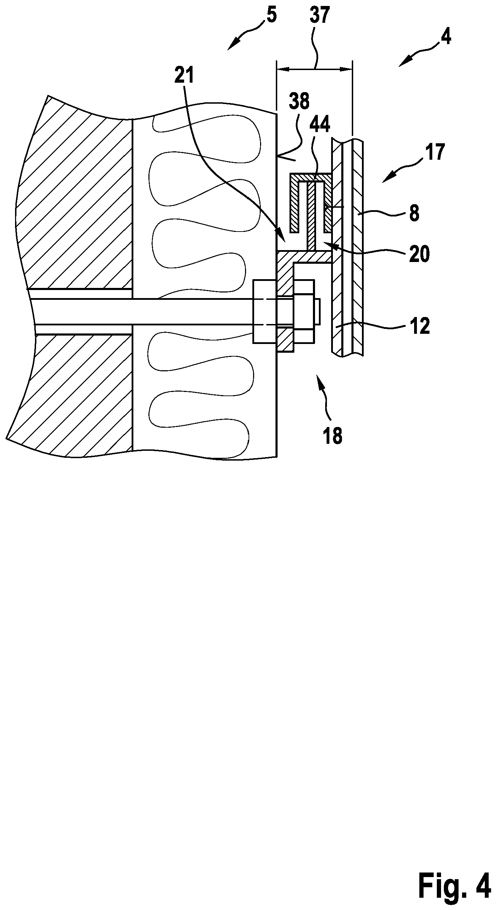

Die Verbindungseinrichtung 4 zur Befestigung bzw. zur Verbindung des wenigstens einen Gehäuses 3, 3', 3" an einem Gegenstand, insbesondere einem Gebäude 5, kann wenigstens eine Befestigungseinrichtung 17 umfassen zur stoffschlüssigen und/oder formschlüssigen und/oder kraftschlüssigen Befestigung des künstlichen Quartiers 1 an einem Gegenstand, insbesondere einer Gebäudewand eines Gebäudes 5. Bevorzugt umfasst die Befestigungseinrichtung 17 ein an der dem Innenraum 2, 2' des Gehäuses 3, 3', 3" abgewandten Rückwand 12, 12' und/oder an den einem Gegenstand, insbesondere einem Gebäude 5, zugewandten Flächen der erste und/oder zweiten Seitenwand 9, 9', 10, 10' und/oder Dachelement 11, 11` ein dort angeordnetes Befestigungsmittel 18, 19. Besonders bevorzugt ist das Befestigungsmittel 18, 19 optional als, insbesondere im Endmontagezustand horizontal verlaufende, Halteschiene 44 ausgebildet, vgl. Figur 4. In Figur 4 ist beispielhaft eine obere Befestigung eines Gehäuses 3, 3`, 3" dargestellt. Die Halteschiene 44 kann im Querschnitt beispielsweise hutprofilartig und/oder u-förmig ausgebildet sein und eine gehäusewandseitig befestigte Halterung 21, 22 in den Innenbereich der hutprofilartig und/oder u-förmigen Halteschiene 44 eingreifen. Hierbei kann eine offene Seite 20 der Halteschiene 44, insbesondere des Hutprofils und/oder des u-förmigen Profils, nach unten gerichtet sein, d.h. zu einem geodätisch tiefer liegenden Ort des im Endmontagezustand bestimmungsgemäß montierten Gehäuses 3, 3', 3" bzw. künstlichen Quartiers 1 hin ausgerichtet sein.

Die Befestigungseinrichtung 17 kann beispielsweise derart ausgebildet sein, dass das Gehäuse 3, 3', 3" vermittels der Befestigungseinrichtung 17 mit einer gegenstandsseitigen, insbesondere gebäudeseitigen (z. B. gebäudewandseitigen), Halterung 21, 22, bevorzugt formschlüssig, besonders bevorzugt einhängbar, verbindbar sein. Die Halterung 21, 22 kann dabei eine erste, mit einem ersten Befestigungsmittel 18 zugeordnete Halterung 21 und eine zweite, einem zweiten Befestigungsmittel 19 zugeordnete Halterung 22 umfassen. In einer vorteilhaften und beispielhaften Ausführungsform ist eine Halterung 21, 22 als eine mit einem Dübel oder einem Ankersystem versehene Bohrung in der Fassade des Gebäudes 5 ausgebildet, wobei in dem Dübel und/oder in dem Ankersystem ein z. B. stabförmiger Körper fixiert sein kann, an welchem das Gehäuse 3, 3', 3" befestigbar ist.

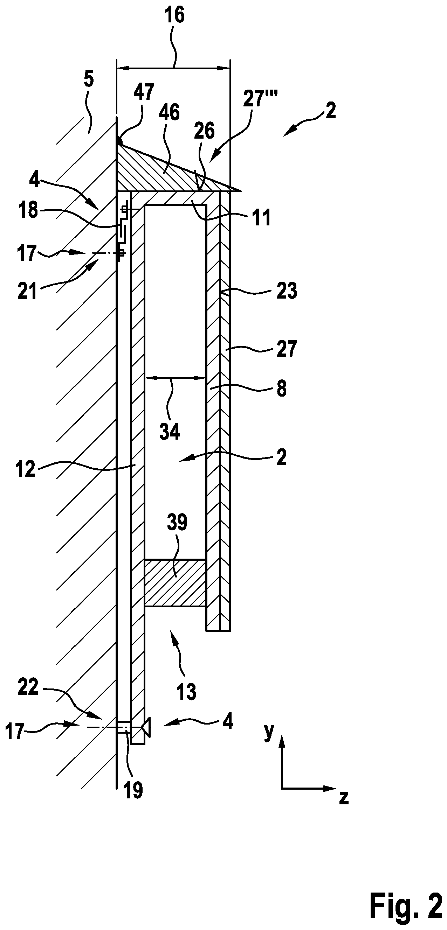

Die Befestigungseinrichtung 17 kann beispielsweise ein erstes und ein weiteres Befestigungsmittel 18, 19 umfassen, wobei ein erstes Befestigungsmittel 18 zumindest überwiegend, insbesondere vollständig, formschlüssig mit einer Gebäudeoberfläche, insbesondere einer Gebäudewandoberfläche, und ein zweites Befestigungsmittel 19 zumindest überwiegend, insbesondere vollständig, kraftschlüssig und/oder vermittels einer Schraubverbindung (vgl. Befestigungsmittel 19 und Halterung 22 gemäß Figur 2) und/oder vermittels einer Nietverbindung und/oder vermittels eines Splints mit einer Gebäudeoberfläche, insbesondere einer Gebäudewandoberfläche, befestigbar oder befestigt ist.

An einer dem Innenraum 2, 2' abgewandten Oberfläche 23, 24, 25, 26 einer Vorderwand 8, 8' und/oder wenigstens einer Seitenwände 9, 9', 10, 10' und/oder eines Dachelements 11, 11' zumindest abschnittsweise, insbesondere vollflächig, ein Abdeckelement 27, 27', 27", 27‴, insbesondere eine Abdeckplatte, angeordnet oder ausgebildet ist, bevorzugt ist das Abdeckelement 27, 27', 27", 27‴ aus mineralischen Material und/oder Kunststoff und/oder Metall und/oder Kunstharz, insbesondere aufweisend ein Epoxidharz, und/oder Beton ausgebildet.

Das Abdeckelement 27‴, welches das Dachelement 11, 11' zumindest abschnittsweise, insbesondere vollständig abdeckt, kann beispielsweise als Dachabdeckung 46 ausgebildet sein. Eine derartige Dachabdeckung 46 kann gleichartig oder identisch zu den Abdeckelementen 27, 27', 27" ausgebildet sein. Alternativ oder zusätzlich kann die Dachabdeckung 46 aus einem im Vergleich zu wenigstens einem Abdeckelement 27, 27`, 27" unterschiedlichen Material ausgebildet sein. Beispielsweise kann die Dachabdeckung 46 zumindest abschnittsweise, insbesondere vollständig, aus einem Metall, aus Kupfer oder aus verzinktem Metall, ausgebildet sein. Alternativ oder zusätzlich kann die Dachabdeckung 46 als flächiges Material vorliegen, beispielsweise als Metallblech, insbesondere als Kupferblech oder als verzinktes Blech.

Die Dachabdeckung 46 und/oder das an der Außenseite bzw. an der Oberseite des Dachelements 11, 11' angeordnete oder ausgebildete Abdeckelement 27‴ kann mit seiner nach oben weisenden Oberfläche einen Winkel zu einer Horizontallinie einschließen, bevorzugt einen Winkel von 1 bis 89°, besonders bevorzugt einen Winkel von 2 bis 45°, höchst bevorzugt einen Winkel von 3 bis 30° einschließen. Damit kann auf diese Oberfläche auftreffendes Wasser schwerkraftbedingt an wenigstens einem Randbereichen des Gehäuses 3, 3', 3" ablaufen.

Es ist möglich, dass eine Dachabdeckung 46 sich über wenigstens einen, insbesondere über sämtliche, Übergangsbereich(e) von zumindest zwei, einem künstlichen Quartier 1, 1' zugeordneter Gehäuse 3, 3`, 3" erstreckt. Beispielsweise kann sich die Dachabdeckung 46 über die überwiegende Anzahl der, insbesondere über sämtliche, Übergangsbereiche von ein künstliches Quartier 1, 1' bildender Gehäuse 3, 3', 3" erstrecken. Damit wird es erreicht, dass sich ein guter Witterungsschutz, auch über die Übergangsbereiche einzelner Gehäuse 3, 3', 3" hinweg erreichen lässt. Auch wird ein etwaiger, sich ggf. in den Innenraum 2, 2` eines Gehäuses 3, 3', 3" hineinziehender Luftzug durch eine derart angeordnete oder ausgebildete Dachabdeckung 46 abgeschwächt oder verhindert. Insbesondere wird die Dachabdeckung 46 nach einer Montage wenigstens zweier, insbesondere sämtlicher, Gehäuse 3, 3', 3" eines künstlichen Quartiers 1, 1' montiert.

Wie in Figur 2 beispielhaft dargestellt, kann die Dachabdeckung 46 ein Haupterstreckungsvolumen eines Gehäuses 3, 3', 3" überragen. Eine beispielhaft nach Art einer Tropfkante ausgebildete oder angeordnete Dachabdeckung 46 ermöglicht ein Ablaufen von auf die Dachabdeckung 46 treffenden Wassers, ohne dass dieses Wasser in Kontakt mit weiteren Bereichen des Gehäuses 3, 3', 3" tritt oder der Kontakt signifikant reduziert wird. Auch kann die Dachabdeckung 46 beispielsweise zumindest abschnittsweise das Haupterstreckungsvolumen des Gehäuses 3, 3', 3" derart überragen, dass im an einen Gegenstand, insbesondere an eine Wand bzw. an einer Gebäudefläche 38, montierten Zustand des Gehäuses 3, 3', 3", ein Zwischenraum zwischen dem Gegenstand, z. B. einer Gebäudewand 38, und dem Gehäuse 3, 3', 3" überbrückt wird. Damit wird es verhindert, dass Wasser und/oder ein Luftzug in den Zwischenraum gelangt.

Alternativ oder zusätzlich kann beispielsweise ein Dichtkörper 47 an oder in die Dachabdeckung 46 und/oder an oder in das Abdeckelement 27‴ angeordnet oder ausgebildet werden, derart, dass ein etwaiger Spalt bzw. Zwischenraum zwischen einem Gegenstand, insbesondere einer Gebäudefläche 38, und dem Gegenhäuse 3, 3', 3" flüssigkeitsundurchlässig und/oder gasundurchlässig abgedichtet wird.

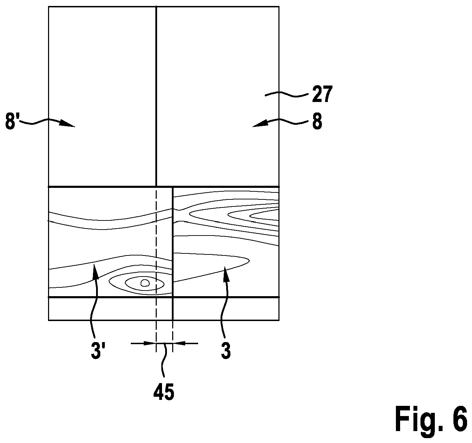

In Figur 6 ist eine Schnittstelle bzw. ein Übergangsbereich zweier aneinander angesetzter Gehäuse 3, 3' gezeigt, wobei das überwiegend die Vorderwand 8 des ersten Gehäuses 3 überdeckende Abdeckelement 27 zumindest abschnittsweise in die Erstreckungsfläche der Vorderwand 8` des weiteren Gehäuses 3` überragt. Durch diesen Versatz 45 bzw. durch dieses abschnittsweise Übergreifen des Abdeckelements 27 eines ersten Gehäuses 3 über die Fläche der Vorderwand 8` eines weiteren Gehäuses 3' wird die Bildung von Luftzirkulation bzw. eines Luftzugs im Bereich der Verbindungsöffnungen 6, 6' reduziert oder verhindert. Mit anderen Worten kann das Abdeckelement 27 derart angeordnet oder ausgebildet sein, dass es stoßüberbrückend im Übergangsbereich zweier Gehäuse 3, 3' vorliegt.

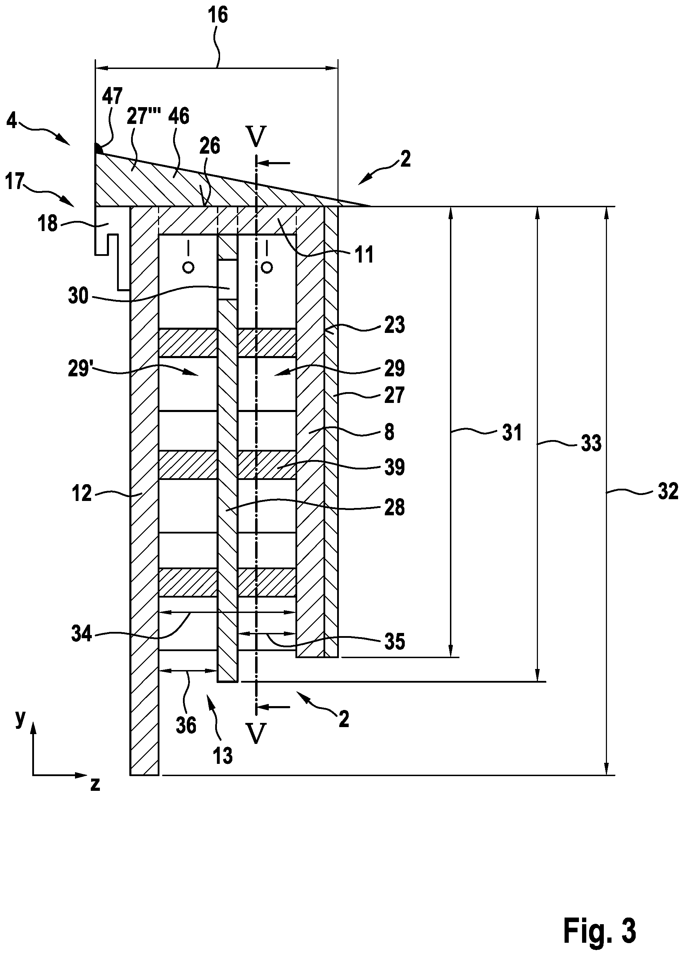

In dem Innenraum 2, 2` wenigstens eines Gehäuses 3, 3', 3" kann beispielsweise wenigstens abschnittsweise eine zwischen einer Vorderwand 8, 8' und einer Rückwand 12, 12' des Gehäuses 3, 3', 3", insbesondere im Wesentlichen parallel zu einer Vorderwand 8, 8' und/oder einer Rückwand 12, 12' des Gehäuses 3, 3', 3" verlaufende, Zwischenwand 28 angeordnet oder ausgebildet sein, vgl. Figur 3. Die Zwischenwand 28 unterteilt dabei den Innenraum 2, 2` in einen ersten und einen weiteren Innenraumteilbereich 29, 29', bevorzugt weist die Zwischenwand 28 wenigstens eine Durchtrittsöffnung 30, 30' auf, welche den ersten und den weiteren Innenraumteilbereich 29, 29' miteinander verbindet. Durch die Durchtrittöffnungen 30, 30' können sich die in einem ersten Innenraumteilbereich 29 befindenden Fledertiere, insbesondere Fledermäuse, in einen weiteren Innenraumteilbereich 29' bewegen, ohne hierbei das künstliche Quartier 1 verlassen zu müssen.

Die Höhe 31 einer Vorderwand 8, 8' des Gehäuses 3, 3', 3" kann beispielsweise geringer sein, als die Höhe 32 einer Rückwand 12, 12' des Gehäuses 3, 3', 3" und/oder als die Höhe 33 einer Zwischenwand 28 des Gehäuses 3, 3', 3". Bevorzugt ist die Vorderwand 8, 8' zur benachbarten Zwischenwand 28 und/oder zur Rückwand 12, 12` um 17 bis 300 mm verkürzt, besonders bevorzugt um 35 bis 200 mm verkürzt, höchst bevorzugt um 40 bis 130 mm verkürzt. Durch die unterschiedlich Höhen 31, 32, 33 kann ein Gehäuse 3, 3`, 3" bzw. ein künstliches Quartier 1 mit einer getreppten Form geschaffen werden, wobei die Verkürzungen bzw. der Treppenversatz vorzugsweise im Bereich der Einflug- und/oder Ausflugöffnungen 13, 13' und/oder zu dieser hingerichtet angeordnet oder ausgebildet sein kann.

Eine Vorderwand 8, 8' und/oder eine Rückwand 12, 12' und/oder wenigstens eine Seitenwand 9, 9', 10, 10', insbesondere sämtliche Seitenwände 9, 9', 10, 10', und/oder eine Zwischenwand 28 und/oder ein Dachelement 11, 11' des Gehäuses 3, 3`, 3" können beispielsweise aus einem Holz umfassenden Material ausgebildet sein. Bevorzugt können die erwähnten Wände 8, 8`, 9, 9`, 10, 10', 11, 11`, 12, 12`, 28 zumindest abschnittsweise, insbesondere vollständig, aus einem mehrlagigen Holz umfassenden Material, besonders bevorzugt aus einem dreilagigen und Holz umfassenden Material, ausgebildet sein.

Die Vorderwand 8, 8' und/oder die Rückwand 12, 12' und/oder wenigstens eine Zwischenwand 28 und/oder eine Seitenwand 9, 9`, 10, 10' und/oder ein Dachelement 11, 11' kann bzw. können zumindest abschnittsweise aus einer Holzwolle-Leichtbauplatte bestehen bzw. zumindest abschnittsweise eine solche umfassen.

Der, insbesondere konstante, Abstand 34, 35, 36, 37 (a) einer Vorderwand 8, 8' zu einer Rückwand 12, 12' und/oder (b) einer Vorderwand 8, 8' zu einer Zwischenwand 28 und/oder (c) einer ersten Zwischenwand 28 zu einer benachbarten Zwischenwand (nicht dargestellt) und/oder (d) einer Zwischenwand 28 zu einer Rückwand 12, 12' und/oder (e) einer Vorderwand 8, 8' zu einer Gegenstandsfläche, insbesondere einer Gebäudefläche 38, im Endmontagezustand des künstliches Quartiers 1 und/oder (f) einer Zwischenwand 28 zu einer Gegenstandsfläche, insbesondere einer Gebäudefläche 38, im Endmontagezustand des künstliches Quartiers 1, kann beispielsweise zwischen 13 bis 29 mm, bevorzugt zwischen 15 bis 27 mm, besonders bevorzugt zwischen 17 bis 25 mm, höchst bevorzugt 20 mm betragen. Der jeweilige Abstand 34, 35, 36, 37 kann hierbei jeweils einen geschlossenen und damit ununterbrochen zusammenhängenden oder jeweils einen durch weitere Elemente, z. B. Zwischenwände, durchbrochenen Innenraum 2, 2' zur Beherbergung bzw. zur Aufnahme von Fledertieren, insbesondere von Fledermäusen, ausbilden.

Es kann beispielsweise vorgesehen sein, dass (a) zwischen einer Vorderwand 8, 8' und einer Rückwand 12, 12' und/oder (b) zwischen einer Vorderwand 8, 8' und einer benachbarten Zwischenwand 28 und/oder (c) zwischen einer Rückwand 12, 12' und einer benachbarten Zwischenwand 28 und/oder (e) zwischen einer ersten und einer weiteren benachbarten Zwischenwand 28 und/oder (f) in einem durch das Gehäuse 3, 3', 3" definierten Innenraum 2, 2` des Gehäuses 3, 3', 3" wenigstens ein Ableitungselement 39, 39', 40, 40' angeordnet ist, bevorzugt bildet das wenigstens eine Ableitungselement 39, 39', 40, 40' eine Verbindung zwischen der Vorderwand 8, 8' und der Rückwand 12, 12' und/oder zwischen der Vorderwand 8, 8' und einer benachbarten Zwischenwand 28 und/oder zwischen einer Rückwand 12, 12' und einer benachbarten Zwischenwand 28 und/oder zwischen einer ersten und einer weiteren benachbarten Zwischenwand 28 und/oder zwischen einer Vorderwand 8, 8' und einer benachbarten Gebäudefläche 38 im Endmontagezustand des künstliches Quartiers 1 und/oder zwischen einer Zwischenwand 28 und einer benachbarten Gebäudefläche 38 im Endmontagezustand des künstliches Quartiers 1.

Wenigstens eine Oberfläche 41 des Ableitungselements 39, 39`, 40, 40' kann beispielsweise zumindest abschnittsweise, insbesondere vollständig, einen Winkel α mit einer im Endmontagezustand verlaufenden Horizontallinie 42 einschließen, insbesondere schließt die dem Dachelement 11, 11' zugewandte Oberfläche 41 des Ableitelements 39, 39`, 40, 40' zumindest abschnittsweise, insbesondere vollständig, einen Winkel α von 10 bis 80°, bevorzugt einen Winkel α von 30 bis 60°, besonders bevorzugt einen Winkel α von 40 bis 50°, höchst bevorzugt einen Winkel α von ca. 45°, mit einer im Endmontagezustand des künstliches Quartiers 1 horizontal verlaufenden Horizontallinie 42 ein. In der dargestellten Ausführungsform ist das wenigstens eine Ableitungselement 39, 39`, 40, 40' als rechteckförmiger Körper dargestellt. Alternativ oder zusätzlich hierzu kann das Ableitungselement 39, 39`, 40, 40' zumindest abschnittsweise, insbesondere vollständig, eine gebogene und/oder gerundete Konturform aufweisen. Beispielsweise kann das Ableitungselement 39, 39`, 40, 40' zumindest abschnittsweise, insbesondere vollständig, kreisförmig und/oder elliptisch und/oder polygonal ausgebildet sein.

Zumindest abschnittsweise, insbesondere vollständig, kann beispielsweise die dem Innenraum 2, 2' zugewandte Oberfläche des Gehäuses 3, 3', 3", insbesondere die dem Innenraum 2, 2' zugewandte Oberfläche einer Vorderwand 8, 8' und/oder einer Rückwand 12, 12' und/oder wenigstens einer Zwischenwand 28 und/oder wenigstens einer Seitenwand 9, 9`, 10, 10' und/oder eines Dachelements 11, 11` eine raue Oberflächenstruktur aufweisen, bevorzugt umfasst die raue Oberflächenstruktur eine Rauheit die rauer ist als eine gehobelte Holzoberfläche. Bevorzugt ist die Rauheit der Oberflächenstruktur rauer oder gleichrau als bzw. wie eine sägeraue Holzoberfläche. Alternativ oder zusätzlich kann die raue Oberflächenstruktur eine Rauheit aufweisen, die vergleichbar mit einer gebürsteten Holzoberfläche ist, bevorzugt einer mit einer Metallbürste, besonders bevorzugt mit einer Stahlbürste, gebürstete Holzoberfläche.

Im Bereich der Verbindungsöffnung 6, 6' 7, 7' an der dem Innenraum 2, 2' des Gehäuses 3, 3', 3" abgewandten Oberfläche 23, 24, 25, 26 kann an wenigstens einem Gehäuse 3, 3`, 3", insbesondere beide oder sämtlichen Gehäusen 3, 3', 3", ein Dichtelement 43 angeordnet oder ausgebildet sein. Das Dichtelement 43 kann beispielsweise ringartig die Verbindungsöffnung 6, 6', 7, 7' umgeben. Bevorzugt wird das Dichtelement 43 im Endmontagezustand komprimierend und/oder dichtend zwischen den beiden Gehäusen 3, 3', 3" aufgenommen und/oder angeordnet. Das Dichtelement 43 verhindert die Bildung eines Luft- und/oder Lichtspalts im Bereich der Verbindung zweier Gehäuse 3, 3', 3" im Bereich der Verbindungsöffnungen 6, 6', 7, 7'. Mit anderen Worten kann durch das Dichtelement 43 die Bildung eines durch die Verbindungsöffnung 6, 6', 7, 7' in den Innenraum 2, 2` einwirkenden Luftzugs bzw. einer Gasströmung verhindert werden.

Die Erfindung kann auch eine Anordnung umfassen, welche ein aus wenigstens zwei Gehäusen 3, 3', 3" eines hierin beschriebenen künstlichen Quartiers 1 besteht, wobei Innenräume 2, 2` der wenigstens zwei Gehäuse 3, 3', 3" über gehäuseseitige Verbindungsöffnungen 6, 6', 7, 7' miteinander, insbesondere unmittelbar, verbindbar oder verbunden sind.

Auch umfasst die Erfindung ein Verfahren zur Herstellung eines hierin beschriebenen künstlichen Quartiers 1 für Fledertiere, wobei ein erstes und ein zweites Gehäuse 3, 3', 3" an einem Gegenstand, insbesondere an einem Gebäude 5, montiert bzw. befestigt wird und die Innenräume 2, 2` des ersten und des weiteren Gehäuses 3, 3', 3" zumindest im Endmontagezustand des künstlichen Quartiers 1 über gehäuseseitige Verbindungsöffnungen 6, 6', 7, 7' miteinander, insbesondere unmittelbar, verbunden oder verbindbar sind.

### BEZUGSZEICHENLISTE

- 1: künstliches Quartier
- 2, 2`: Innenraum von 3, 3', 3"
- 3, 3', 3": Gehäuse
- 4: Verbindungseinrichtung
- 5: Gebäude
- 6, 6': Verbindungsöffnung
- 7, 7`: Verbindungsöffnung
- 8, 8`: Vorderwand
- 9, 9': erste Seitenwand
- 10, 10': zweite Seitenwand
- 11, 11': Dachelement
- 12, 12': Rückwand
- 13, 13': Einflug- und/oder Ausflugöffnung
- 14: Länge
- 15: Höhe
- 16: Tiefe
- 17: Befestigungseinrichtung
- 18: erstes Befestigungsmittel
- 19: zweites Befestigungsmittel
- 20: offene Seite
- 21: erste Halterung
- 22: zweite Halterung
- 23: Oberfläche von 8, 8'
- 24, 24': Oberfläche von 9, 9'
- 25: Oberfläche von 10, 10'
- 26: Oberfläche von 11, 11'
- 27, 27', 27", 27‴: Abdeckelement
- 28: Zwischenwand
- 29, 29': Innenraumteilbereich
- 30, 30': Durchtrittsöffnung von 29, 29'
- 31: Höhe von 8, 8'
- 32: Höhe von 12, 12'
- 33: Höhe von 28
- 34: Abstand zwischen 8, 8' und 12, 12'
- 35: Abstand zwischen 8, 8' und 28
- 36: Abstand zwischen 28 und 12, 12'
- 37: Abstand zwischen 8, 8' und 38
- 38: Gebäudefläche
- 39, 39': Ableitungselement
- 40, 40': Ableitungselement
- 41, 41', 41", 41‴: Oberfläche von 39, 39', 40, 40'
- 42: Horizontallinie
- 43: Dichtelement
- 44: Halteschiene
- 45: Versatz
- 46: Dachabdeckung
- 47: Dichtkörper

## Patentansprüche

1. Künstliches Quartier (1) für wenigstens ein Fledertier, insbesondere für wenigstens eine Fledermaus, umfassend ein zumindest abschnittsweise einen Innenraum (2, 2`) umgebendes Gehäuse (3, 3', 3"), wobei das Gehäuse (3, 3', 3") über eine Verbindungseinrichtung (4) an einem Gegenstand, insbesondere einem Gebäude (5), befestigbar ist,
wobei das künstliche Quartier ein erstes, einen ersten Innenraum (2) zumindest abschnittsweise umgebendes Gehäuse (3) und ein weiteres, einen weiteren Innenraum (2') zumindest abschnittsweise umgebendes Gehäuse (3', 3") aufweist,
wobei das erste und das weitere Gehäuse (3, 3', 3") jeweils eine Verbindungsöffnung (6, 6', 7, 7`) umfassen und zumindest in einem Endmontagezustand des künstlichen Quartiers (1) der erste Innenraum (2) und der weitere Innenraum (2') über die Verbindungsöffnungen (6, 6`, 7, 7') miteinander verbindbar oder verbunden sind, wobei
das erste und das weitere Gehäuse (3, 3', 3") zusammensetzbar sind und an einer Verbindungsschnittstelle zweier benachbarter Gehäuse (3, 3', 3") jeweils über die Verbindungsöffnungen (6, 6`, 7, 7') Übertrittsmöglichkeiten für die Fledertiere vorliegen und
das erste Gehäuse (3) und das weitere Gehäuse (3', 3") an einem im Endmontagezustand geodätisch tief liegenden Ort des ersten und weiteren Gehäuses (3, 3', 3") eine Einflug- und/oder Ausflugöffnung (13, 13`) aufweisen.

2. Künstliches Quartier (1) nach Anspruch 1, **dadurch gekennzeichnet, dass** zumindest in einem Endmontagezustand des künstlichen Quartiers (1) der erste Innenraum (2) und der weitere Innenraum (2`) über die Verbindungsöffnungen (6, 6`, 7, 7') unmittelbar miteinander verbindbar oder verbunden sind.

3. Künstliches Quartier (1) nach Anspruch 1 oder 2, **dadurch gekennzeichnet, dass** das erste und/oder weitere Gehäuse (3, 3`, 3") eine flächenhafte und/oder panelartige, insbesondere quaderartige, Form aufweist oder aufweisen, deren Länge (14) und/oder Höhe (15) wenigstens dem Zweifachen, bevorzugt wenigstens dem Vierfachen, besonders bevorzugt wenigstens dem Siebenfachen, höchst bevorzugt wenigstens dem Neunfachen, der Tiefe (16) des Gehäuses (3, 3', 3") entsprechen oder entspricht.

4. Künstliches Quartier (1) nach einem der vorhergehenden Ansprüche, **dadurch gekennzeichnet, dass** das wenigstens eine Gehäuse (3, 3', 3") eine Befestigungseinrichtung (17) umfasst zur stoffschlüssigen und/oder formschlüssigen und/oder kraftschlüssigen Befestigung des künstlichen Quartiers (1) an einem Gegenstand, insbesondere einer Gebäudewand, bevorzugt umfasst die Befestigungseinrichtung (17) ein an der dem Innenraum (2, 2') des Gehäuses (3, 3', 3") abgewandten Rückwand (12, 12`) angeordnetes Befestigungsmittel (18, 19), besonders bevorzugt ist wenigstens ein Befestigungsmittel (18, 19) als, insbesondere im Endmontagezustand horizontal verlaufende, Halteschiene (44) ausgebildet.

5. Künstliches Quartier (1) nach einem der vorhergehenden Ansprüche, **dadurch gekennzeichnet, dass** an einer dem Innenraum (2, 2`) abgewandten Oberfläche (23, 24, 25, 26) einer Vorderwand (8, 8') und/oder wenigstens einer Seitenwände (9, 9', 10, 10') und/oder eines Dachelements (11, 11') zumindest abschnittsweise, insbesondere vollflächig, ein Abdeckelement (27, 27', 27", 27‴), insbesondere eine Abdeckplatte, angeordnet oder ausgebildet ist, bevorzugt ist das Abdeckelement (27, 27', 27", 27‴) aus mineralischem Material und/oder Kunststoff und/oder Metall und/oder Kunstharz, insbesondere aufweisend ein Epoxidharz, und/oder Beton ausgebildet.

6. Künstliches Quartier (1) nach einem der vorhergehenden Ansprüche, **dadurch gekennzeichnet, dass** in dem Innenraum (2, 2`) wenigstens eines Gehäuses (3, 3', 3") zumindest eine wenigstens abschnittsweise zwischen einer Vorderwand (8, 8') und einer Rückwand (12, 12`) des Gehäuses (3, 3', 3") eine, insbesondere eine im Wesentlichen parallel zu einer Vorderwand (8, 8') und/oder einer Rückwand (12, 12') des Gehäuses (3, 3', 3") verlaufende, Zwischenwand (28) angeordnet oder ausgebildet ist, welche den Innenraum (2, 2`) in einen ersten und einen weiteren Innenraumteilbereich (29, 29`) unterteilt, bevorzugt weist die Zwischenwand (28) zumindest eine Durchtrittsöffnung (30, 30`) auf, welche den ersten und den weiteren Innenraumteilbereich (29, 29`) miteinander verbindet.

7. Künstliches Quartier (1) nach einem der vorhergehenden Ansprüche, **dadurch gekennzeichnet, dass** die Höhe (31) einer Vorderwand (8, 8') des Gehäuses (3, 3', 3") geringer ist als die Höhe (32) einer Rückwand (12, 12`) des Gehäuses (3, 3', 3") und/oder als die Höhe (33) einer Zwischenwand (28) des Gehäuses (3, 3', 3"), bevorzugt ist die Vorderwand (8, 8') zu einer benachbarten Zwischenwand und/oder zu einer Rückwand (12, 12') um 17 bis 300 mm, besonders bevorzugt um 35 bis 200 mm, höchst bevorzugt um 40 bis 130 mm, verkürzt.

8. Künstliches Quartier (1) nach einem der vorhergehenden Ansprüche, **dadurch gekennzeichnet, dass** eine Vorderwand (8, 8') und/oder eine Rückwand (12, 12') und/oder wenigstens eine Seitenwand (9, 9`, 10, 10'), insbesondere sämtliche Seitenwände (9, 9', 10, 10'), und/oder ein Dachelement (11, 11') des Gehäuses (3, 3', 3") aus einem Holz umfassenden Material ausgebildet ist oder sind, bevorzugt aus einem mehrlagigen Holz umfassenden Material ausgebildet ist oder sind, besonders bevorzugt aus einem dreilagigen Holz umfassenden Material ausgebildet ist oder sind.

9. Künstliches Quartier (1) nach einem der vorhergehenden Ansprüche, **dadurch gekennzeichnet, dass** der, insbesondere konstante, Abstand (34, 35, 36, 37)
- einer Vorderwand (8, 8') zu einer Rückwand (12, 12') und/oder
- einer Vorderwand (8, 8') zu einer Zwischenwand (28) und/oder
- einer ersten Zwischenwand (28) zu einer benachbarten Zwischenwand und/oder
- einer Zwischenwand (28) zu einer Rückwand (12, 12') und/oder
- einer Vorderwand (8, 8') zu einer Gebäudefläche (38) im Endmontagezustand des künstlichen Quartiers (1) und/oder
- einer Zwischenwand (28) zu einer Gebäudefläche (38) im Endmontagezustand des künstlichen Quartiers (1)
zwischen 13 bis 29 mm, bevorzugt zwischen 15 bis 27 mm, besonders bevorzugt zwischen 17 bis 25 mm, höchst bevorzugt 19 bis 21 mm, beträgt.

10. Künstliches Quartier (1) nach einem der vorhergehenden Ansprüche, **dadurch gekennzeichnet, dass**
- zwischen einer Vorderwand (8, 8') und einer Rückwand (12, 12') und/oder
- zwischen einer Vorderwand (8, 8') und einer benachbarten Zwischenwand (28) und/oder
- zwischen einer Rückwand (12, 12`) und einer benachbarten Zwischenwand (28) und/oder
- zwischen einer ersten und einer weiteren benachbarten Zwischenwand (28) und/oder
- in einem durch das Gehäuse (3, 3', 3") definierten Innenraum (2, 2') des Gehäuses (3, 3', 3")
wenigstens ein Ableitungselement (39, 39', 40, 40') angeordnet ist, bevorzugt bildet das wenigstens eine Ableitungselement (39, 39`, 40, 40') eine Verbindung zwischen der Vorderwand (8, 8') und der Rückwand (12, 12') und/oder zwischen der Vorderwand (8, 8') und einer benachbarten Zwischenwand (28) und/oder zwischen einer Rückwand (12, 12') und einer benachbarten Zwischenwand (28) und/oder zwischen einer ersten und einer weiteren benachbarten Zwischenwand (28) und/oder zwischen einer Vorderwand (8, 8') und einer benachbarten Gebäudefläche (38) im Endmontagezustand des künstliches Quartiers (1) und/oder zwischen einer Zwischenwand (28) und einer benachbarten Gebäudefläche (38) im Endmontagezustand des künstliches Quartiers (1).

11. Künstliches Quartier (1) nach Anspruch 10, **dadurch gekennzeichnet, dass** wenigstens eine Oberfläche (41) des Ableitungselements (39, 39', 40, 40') zumindest abschnittsweise, insbesondere vollständig, einen Winkel α mit einer im Endmontagezustand verlaufenden Horizontallinie (42) einschließt, insbesondere schließt die dem Dachelement (11, 11') zugewandte Oberfläche (41) des Ableitelements (39, 39`, 40, 40`) zumindest abschnittsweise, insbesondere vollständig, einen Winkel α von 10 bis 80°, bevorzugt einen Winkel α von 30 bis 60°, besonders bevorzugt einen Winkel α von 40 bis 50°, höchst bevorzugt einen Winkel α von ca. 45°, mit einer im Endmontagezustand des künstliches Quartiers (1) horizontal verlaufenden Horizontallinie (42) ein.

12. Künstliches Quartier (1) nach einem der vorhergehenden Ansprüche, **dadurch gekennzeichnet, dass** zumindest abschnittsweise, insbesondere vollständig, die dem Innenraum (2, 2') zugewandte Oberfläche des Gehäuses (3, 3', 3"), insbesondere die dem Innenraum (2, 2') zugewandte Oberfläche einer Vorderwand (8, 8') und/oder einer Rückwand (12, 12') und/oder wenigstens einer Zwischenwand (28) und/oder wenigstens einer Seitenwand (9, 9', 10, 10') und/oder eines Dachelements (11, 11') eine raue Oberflächenstruktur aufweist, bevorzugt umfasst die raue Oberflächenstruktur eine Rauheit die rauer ist als eine gehobelte Holzoberfläche, besonders bevorzugt ist die Rauheit der Oberflächenstruktur rauer oder gleichrau als bzw. wie eine sägeraue Holzoberfläche, höchst bevorzugt weist die raue Oberflächenstruktur eine Rauheit auf, die vergleichbar ist mit einer gebürsteten Holzoberfläche.

13. Künstliches Quartier (1) nach einem der vorhergehenden Ansprüche, **dadurch gekennzeichnet, dass** im Bereich der Verbindungsöffnung (6, 6', 7, 7') an der dem Innenraum (2, 2') des Gehäuses (3, 3', 3") abgewandten Oberfläche (23, 24, 25, 26) wenigstens eines Gehäuses (3, 3', 3"), insbesondere beider Gehäuse (3, 3', 3"), ein Dichtelement (43) angeordnet ist, bevorzugt wird das Dichtelement (43) im Endmontagezustand komprimierend und/oder dichtend zwischen den beiden Gehäusen (3, 3', 3") aufgenommen und/oder angeordnet.

14. Anordnung umfassend ein aus wenigstens zwei Gehäusen (3, 3', 3") bestehendes künstliches Quartier (1) nach einem der vorhergehenden Ansprüche, wobei Innenräume (2, 2') der wenigstens zwei Gehäuse (3, 3', 3") über gehäuseseitige Verbindungsöffnungen (6, 6', 7, 7') miteinander, insbesondere unmittelbar, verbindbar oder verbunden sind.

15. Verfahren zur Herstellung eines künstlichen Quartiers (1) für Fledertiere, umfassend ein künstliches Quartier (1) nach einem der Ansprüche 1 bis 13, wobei ein erstes und ein zweites Gehäuse (3, 3', 3") an einem Gegenstand, insbesondere an einem Gebäude (5), montiert wird und die Innenräume (2, 2') des ersten und des weiteren Gehäuses (3, 3', 3") zumindest im Endmontagezustand über gehäuseseitige Verbindungsöffnungen (6, 6', 7, 7') miteinander, insbesondere unmittelbar, verbunden oder verbindbar sind.

## Claims

1. Artificial quarter (1) for at least one bat, in particular for at least one bat, comprising, at least in part, an interior (2, 2') housing (3, 3', 3'), wherein the housing (3, 3', 3') via a connecting device (4) can be attached to an object, in particular a building (5), **characterised by** a first, a first interior (2), at least partially surrounding housing (3) and another, a further interior (2'), at least sectionally surrounding housing (3', 3'), wherein the first and the further housing (3, 3', 3') each comprise a connecting opening (6, 6', 7, 7') and at least in a final assembly state of the artificial quarter (1) the first interior (2) and the further interior (2') are connectable or connected via the connecting openings (6, 6', 7, 7'), wherein
the first and the further housing (3, 3', 3') can be assembled and are present at a connection interface of two adjacent housings (3, 3`, 3') each via the connection openings (6, 6', 7, 7') for the bats; and
the first housing (3) and the further housing (3', 3") at a geodetically low geodetic location of the first and further housing (3, 3', 3') at a geodetically low position of the first and further housing (3, 3") have an entry and/or excursion opening (13, 13').

2. Artificial quarter (1) according to claim 1, **characterised in that** at least in a final assembly state of the artificial quarter (1) the first interior (2) and the further interior (2') are directly connectable or connected via the connection openings (6, 6', 7, 7').

3. Artificial quarter (1) according to claim 1 or 2, **characterised in that** the first and/or further housing (3, 3', 3') has or has a surface-like and/or panel-like, in particular cubular, shape whose length (14) and/or height (15) at least two times, preferably at least four times, particularly preferably at least seven times, most preferably at least nine times, the depth (16) of the housing (3, 3', 3').

4. Artificial quarter (1) according to one of the preceding claims, **characterised in that** the at least one housing (3, 3', 3') comprises a fastening device (17) for the material-locking and/or form-fitting and/or force-fitting fastening of the artificial quarter (1) to an object, in particular a building wall, preferably includes a fastening device (17) disposed on the interior (2, 2') of the housing (3, 3', 3') facing back wall (12, 12') a fastening device (18, 19), especially preferably a fastening means (18, 19) as, in particular in the final assembly state running horizontal, retaining rails.

5. Artificial quarter (1) according to one of the preceding claims, **characterised in that on a surface facing away from the interior (2, 2') and/or a front wall (8,** 8') and/or at least one sidewall (9, 9', 10, 10') and/or a roof element (11, 11'), at least in part, in particular full-area, a covering element (27, 27', 27', 27', 27', 27", '27', '27', '27', '27', '27', '27', '27', '27', '27', '27', '27', '27', '27', '27', '27', '27', '27', '27', '27', '27', '27', '27', '27', '27', '27', '27', '27', '27', '27', '27', '27', '27', '27', '27', '27', '27', '27', '27', '27', '27', '27', '27', '27', '27', '27', '27', '27', '27', '27', '27', '27', '27', '27' in particular, a cover plate, arranged or formed, preferably is the covering element (27, 27', 27', 27") of mineral material and/or plastic and/or metal and/or synthetic resin, in particular having an epoxy resin, and/or concrete formed.

6. Artificial quarter (1) according to one of the preceding claims, **characterised in that** in the interior (2, 2') at least one housing (3, 3', 3') between a front wall (8, 8') and a back wall (12, 12') of the housing (3, 3', 3") one, in particular one substantially parallel to a front wall (8, 8') and/or a rear wall (12, 3'), one, in particular one substantially parallel to a front wall (8, 8') and/or a rear wall (12, 3, 12') of the housing (3, 3', 3') running, intermediate wall (28) arranged or formed, which divides the interior (2, 2') into a first and a further interior part portion (29, 29'), preferably the intermediate wall (28) has at least one passage opening (30, 30'), which connects the first and the further interior part portion (29, 29') with each other.

7. Artificial quarter (1) according to any of the preceding claims, **characterised in that** the height (31) of a front wall (8, 8') of the housing (3, 3', 3') is lower than the height (32) of a rear wall (12, 12') of the housing (3, 3', 3') and/or the height (3, 3') of an intermediate wall (28) of the housing (3, 3', 3'), preferred is the front wall (8, 8') to an adjacent intermediate wall and/or to a rear wall (12, 12') by 17 to 300 mm, especially preferably by 35 to 200 mm, most preferably by 40 to 130 mm.

8. Artificial quarter (1) according to one of the preceding claims, **characterised in that** a front wall (8, 8') and/or a rear wall (12, 12') and/or at least one side wall (9, 9', 10, 10'), in particular all side walls (9, 9', 10, 10'), and/or a roof element (11, 11') of the housing (3, 3', 3') is or are formed of a wood-covered material, preferably composed of a multi-layered wood material, is or are particularly preferably composed of a three-layer wood material.

9. Artificial quarter (1) according to one of the preceding claims, **characterised in that** the, in particular constant distance (34, 35, 36, 37)
- a front wall (8, 8') to a back wall (12, 12') and/or
- a front wall (8, 8') to a wall (28) and/or
- a first wall (28) to a neighboring wall and/or
- a wall (28) to a back wall (12, 12') and/or
- a front wall (8, 8') to a building area (38) in the final assembly state of the artificial quarter (1) and/or
- a wall (28) to a building area (38) in the final assembly condition of the artificial quarter (1)
between 13 to 29 mm, preferably between 15 to 27 mm, especially preferably between 17 to 25 mm, most preferably 19 to 21 mm.

10. Artificial quarter (1) according to one of the preceding claims, **characterised in that**
- between a front wall (8, 8') and a back wall (12, 12') and/or
- between a front wall (8, 8') and an adjacent wall (28) and/or
- between a back wall (12, 12') and an adjacent wall (28) and/or
- between a first and another adjacent wall (28) and/or
- in an interior (2, 2') of the housing (3, 3', 3') defined by the housing (3, 3', 3')
at least one derivative element (39, 39', 40, 40') preferably forms a connection between the front wall (8, 8') and the rear wall (12, 12') and/or between the front wall (8, 8') and/or an adjacent intermediate wall (28) and/or between a front wall (12, 12') and/or between a first and another adjacent intermediate wall (28) and/or between a front wall (8, 12') and/or between a first and another adjacent intermediate wall (28, 8') and an adjacent building area (38) in the final assembly state of the artificial quarter (1) and/or between an intermediate wall (28) and an adjacent building area (38) in the final assembly state of the artificial quarter (1).

11. Artificial quarter (1) according to claim 10, **characterised in that** at least one surface (41) of the discharge element (39, 39', 40, 40') includes at least partwise, in particular completely, an angle α with a horizontal line (42) running in the final assembly state, in particular closes the surface facing the roof element (11, 11') of the discharge element (39, 39', 40, 40') at least in part, in particular complete, an angle α from 10 to 80°, preferably an angle α from 30 to 60°, especially preferably an angle α from 40 to 50°, most preferably an angle α of approx. 45°, with a horizontal line (42) running horizontally in the final assembly state of the artificial quarter (1).

12. Artificial quarter (1) according to one of the preceding claims, **characterised in that** at least sectionwise, in particular complete, the surface facing to the interior (2, 2') and/or a rear wall (12, 12') and/or at least one intermediate wall (28) and/or at least one sidewall (9, 9', 10, 10') and/or a roof element (11, 11') has a rough surface structure, preferably the rough surface structure comprises a roughness that is rougher than a planed wood surface, particularly preferably the roughness of the surface structure is rougher or equal than or similar to a sawy wood surface, most preferably the rough surface structure has a roughness comparable to a brushed wood surface.

13. Artificial quarter (1) according to one of the preceding claims, **characterised in that** in the region of the connection opening (6, 6', 7, 7') on the interior (2, 2') of the housing (3, 3', 3') facing surface (23, 24, 25, 26) at least one housing (3, 3', 3'), in particular both housings (3, 3', 3'), a density element (43) is arranged, preferably the sealing element (43) is compressed and/or sealed between the two housings (3, 3', 3') and/or arranged in the final assembly state.

14. Arrangement comprising an artificial quarter (1) consisting of at least two housings (3, 3', 3') according to one of the preceding claims, wherein interiors (2, 2') of at least two housings (3, 3', 3') via housing-side connection openings (6, 6', 7, 7') are interconnected with each other, in particular directly, connectable or connected.

15. Method for producing an artificial quarter (1) for bats, comprising an artificial quarter (1) according to one of claims 1 to 13, wherein a first and a second housing (3, 3', 3') is mounted to an object, in particular to a building (5), and the interiors (2, 2') of the first and the further housing (3, 3', 3') are at least in the final assembly state via housing-side connection openings (6, 6', 7, 7') with each other, in particular directly, connected or connectable.

## Revendications

1. Quartier artificiel (1) pour au moins une chauve-souris, en particulier pour au moins une chauve-souris, comprenant un boîtier environnant au moins en partie un intérieur (2, 2') (3, 3"), le boîtier étant fixé par un dispositif d'attelage (4) à un objet, en particulier un bâtiment (5), **caractérisé par** un premier boîtier, un premier intérieur (2) au moins partiellement environnant (3) et un autre intérieur (2') au moins partiellement environnant (3', 3"); le premier et l'autre boîtier (3, 3', 3") comportent chacun une ouverture de connexion (6, 6', 7, 7') et, au moins dans un état de montage final du quartier artificiel (1), le premier intérieur (2) et l'habitacle supplémentaire (2') peuvent être reliés ou reliés par les ouvertures de raccordement (6, 6', 7, 7'), où:
le premier et l'autre boîtier (3, 3", 3") peuvent être assemblés et disposent d'une interface de connexion de deux boîtiers adjacents (3, 3', 3') à travers les ouvertures de connexion (6, 6', 7, 7') pour les chauves-souris; et
le premier boîtier (3) et l'autre boîtier (3', 3") comportent une ouverture d'entrée et/ou d'excursion (13, 13') dans un emplacement géodésiquement bas dans l'état d'assemblage final du premier et de l'autre (3, 3").

2. Quartier artificiel (1) selon la revendication 1, **caractérisé en ce que**, au moins dans un état d'assemblage final du quartier artificiel (1), le premier intérieur (2) et l'habitacle supplémentaire (2') sont directement interconnectables ou reliés par les ouvertures de raccordement (6, 6', 7, 7').

3. Quartier artificiel (1) selon la revendication 1 ou 2, **caractérisé en ce que** le premier et/ou autre boîtier (3, 3', 3') présente ou présente une forme superficielle et/ou panel, en particulier de forme carrée, dont la longueur (14) et/ou la hauteur (15) correspondent ou correspondent au moins au double, de préférence au moins quadruple, surtout au moins sept fois, de préférence au moins neuf, à la profondeur (16) du boîtier (3, 3', 3").

4. Quartier artificiel (1) selon l'une des revendications précédentes, **caractérisé en ce que** l'au moins un boîtier (3, 3', 3") comprend un dispositif de fixation (17) pour la fixation à l'intérieur (2, 2') du logement artificiel (1) à un objet, et notamment à un mur de bâtiment, le dispositif de fixation (17) comprend de préférence un moyen de fixation (18, 19), disposé à l'intérieur (2, 2') du boîtier (3, 3', 3') (12, 12'), il est particulièrement préférable d'avoir au moins un moyen de fixation (18, 19) en tant que rail de fixation horizontal (44), en particulier à l'état de montage final.

5. Quartier artificiel (1) selon l'une des revendications précédentes, **caractérisé en ce qu' une surface opposée à** l'intérieur (2, 2') (23, 24, 25, 26) d'une paroi avant (8, 8') et/ou au moins d'une paroi latérale (9, 9', 10, 10') et/ou d'un élément de toit (11, 11'), un élément de couverture (27, 27', 27', 27"), en particulier, une plaque de recouvrement, disposée ou formée, privilégie l'élément de couverture (27, 27", 27") en matériau minéral et/ou en plastique et/ou en métal et/ou en résine synthétique, en particulier présentant une résine époxy et/ou du béton.

6. Quartier artificiel (1) selon l'une des revendications précédentes, **caractérisé en ce que**, dans l'habitacle (2, 2') au moins un boîtier (3, 3', 3") au moins une partie au moins entre une paroi avant (8, 8') et une paroi arrière (12, 12') du boîtier (3, 3', 3"), une, en particulier une paroi avant (8, 8') et/ou une paroi arrière (12; 12') de l'enceinte (3, 3', 3') disposée ou formée (28) qui divise l'intérieur (2, 2') en une première et une autre partie intérieure (29, 29'), la paroi intermédiaire (28) comporte au moins une ouverture de passage (30, 30') reliant la première et l'autre partie de l'habitacle (29, 29').

7. Quartier artificiel (1) selon l'une des revendications précédentes, **caractérisé en ce que** la hauteur (31) d'une paroi avant (8, 8') du boîtier (3, 3', 3') est inférieure à la hauteur (32) d'une paroi arrière (12, 12') du boîtier (3, 3', 3') et/ou à la hauteur (33) d'une paroi intermédiaire (28) du boîtier (3, 3', 3"), la paroi avant (8, 8') est préférable à une paroi intermédiaire adjacente et/ou à une paroi arrière (12, 12') de 17 à 300mm, particulièrement favorisée de 35 à 200 mm, au maximum de 40 mm,

8. Quartier artificiel (1) selon l'une des revendications précédentes, **caractérisé en ce qu'une** paroi avant (8, 8') et/ou une paroi arrière (12, 12') et/ou au moins une paroi latérale (9, 9', 10, 10'), en particulier toutes les parois latérales (9, 9", 10, 10'), et/ou un élément de toiture (11, 11') du boîtier (3, 3', 3') est ou sont constitués d'un matériau comprenant du bois à plusieurs couches, est ou sont conçus de préférence à partir d'un matériau à trois couches.

9. Quartier artificiel (1) selon l'une des revendications précédentes, **caractérisé en ce que** la distance, notamment constante, (34, 35, 36, 37)
- une paroi avant (8, 8') vers une paroi arrière (12, 12') et/ou
- une paroi avant (8, 8') à une paroi intermédiaire (28) et/ou
- une première paroi intermédiaire (28) à une paroi intermédiaire adjacente et/ou
- une paroi intermédiaire (28) vers une paroi arrière (12, 12') et/ou
- une paroi avant (8, 8') d'une surface du bâtiment (38) à l'état d'assemblage final du quartier artificiel (1) et/ou
- une paroi intermédiaire (28) sur une surface du bâtiment (38) à l'état d'assemblage final du quartier artificiel (1)
entre 13 et 29 mm, de préférence entre 15 et 27 mm, particulièrement entre 17 et 25 mm, de préférence de 19 à 21 mm.

10. Quartier artificiel (1) selon l'une des revendications précédentes, **caractérisé en ce que**:
- entre une paroi avant (8, 8') et une paroi arrière (12, 12') et/ou
- entre une paroi avant (8, 8') et une paroi intermédiaire adjacente (28) et/ou
- entre une paroi arrière (12, 12') et une paroi intermédiaire adjacente (28) et/ou
- entre une première et une autre paroi intermédiaire adjacente (28) et/ou
- dans un intérieur (2, 2') défini par le boîtier (3, 3', 3') du boîtier (3, 3', 3') au moins un élément de dérivation (39, 39', 40, 40') constitue de préférence un élément de dérivation (39, 39', 40, 40') un lien entre la paroi avant (8, 8') et la paroi arrière (12, 12') et/ou entre la paroi avant (8, 8') et une paroi intermédiaire adjacente (28) et/ou entre une paroi arrière (12, 8'), 12') et une paroi intermédiaire adjacente (28) et/ou entre une première et une autre paroi intermédiaire adjacente (28) et/ou entre une paroi avant (8, 8') et une surface adjacente (38) à l'état d'assemblage final du quartier artificiel (1) et/ou entre une paroi intermédiaire (28) et une surface adjacente (38) à l'état d'assemblage final du quartier artificiel (1).

11. Quartier artificiel (1) selon la revendication 10, **caractérisé en ce qu'**au moins une surface (41) de l'élément de dérivation (39, 39', 40, 40') comprend, au moins par section, notamment complètement, un angle α avec une ligne horizontale (42) en cours d'assemblage final, en particulier la surface de l'élément de dérivation (11, 11') de l'élément de dérivation (39, 39'), 40, 40') au moins par section, en particulier complet, un angle α de 10 à 80°, de préférence un angle α de 30 à 60°, particulièrement un angle α de 40 à 50°, de préférence un angle α d'environ 45°, avec une ligne horizontale (42) à l'état de montage final du quartier artificiel (1).

12. Quartier artificiel (1) selon l'une des revendications précédentes, **caractérisé en ce que**, au moins par section, en particulier complet, la surface du boîtier orientée vers l'intérieur (2, 2') (3, 3"), et notamment la surface d'une paroi avant (8, 8') et/ou d'une paroi arrière (12, 12') et/ou d'une paroi arrière (12, 12'), et/ou au moins une paroi latérale (28), et/ou au moins une paroi latérale (9, 9', 10, 10') et/ou un élément de toiture (11, 11') présente une structure de surface rugueuse, de préférence la structure de surface rugueuse comprend une rugosité plus rugueuse qu'une surface en bois rabotée, en particulier la rugosité de la structure de surface est plus rugueuse ou équivalant à une surface en bois scieuse; la structure de surface rugueuse présente une rugosité comparable à celle d'une surface en bois brossé.

13. Quartier artificiel (1) selon l'une des revendications précédentes, **caractérisé en ce que**, dans le domaine de l'ouverture de raccordement (6, 6', 7, 7') sur la surface opposée à l'intérieur (2, 2') du boîtier (3, 3', 3'), un élément de densité (43), un élément de densité (43), comprimant et/ou dense entre les deux boîtiers (3, 3', 3'), l'élément de densité (43) est pris en comprimant et/ou disposé de manière dense entre les deux boîtiers (3, 3', 3') et/ou disposé.

14. Aménagement complet d'un quartier artificiel (1) composé d'au moins deux boîtiers (3, 3', 3') selon l'une des revendications précédentes, dans lequel les intérieurs (2, 2') des deux boîtiers au moins (3, 3', 3') sont reliés entre eux par des ouvertures de raccordement côté boîtier (6, 6', 7, 7'), notamment directement, interconnectables ou reliés.

15. Procédé de fabrication d'un quartier artificiel (1) pour chauves-souris, comprenant un quartier artificiel (1) selon l'une des revendications 1 à 13, dans lequel un premier et un deuxième boîtier (3, 3', 3") sont montés sur un objet, notamment sur un bâtiment (5), et les espaces intérieurs (2, 2') du premier et de l'autre boîtier (3, 3', 3") sont reliés ou interconnectables, notamment directement, ou interconnectés, au moins à l'état de montage final par des ouvertures côté boîtier (6, 6', 7, 7').
